# EUROPEAN PATENT APPLICATION

(11) **EP 3 193 392 A1**
(43) Date of publication of application: **19.07.2017**
(21) Application number: 15840381.6
(22) Date of filing: 04.09.2015
(51) Int. Cl.: H01M 4/13, H01M 4/136, H01M 4/36, H01M 4/505, H01M 4/525, H01M 4/58, H01M 4/74, H01M 10/0525, H01M 10/0585

(54) **POSITIVE ELECTRODE FOR LITHIUM-ION SECONDARY CELL, AND LITHIUM-ION SECONDARY CELL**

(30) Priority: 10.09.2014 JP 2014184153; 27.05.2015 JP 2015107685
(71) Applicant: Mitsubishi Materials Corporation, Chiyoda-ku Tokyo 100-8117 (JP)
(72) Inventor: AKIKUSA Jun, Naka-shi Ibaraki 311-0102 (JP); SHIMIZU Sho, Naka-shi Ibaraki 311-0102 (JP); YANAGI Shigenari, Naka-shi Ibaraki 311-0102 (JP)
(74) Representative: Gille Hrabal
(86) International application number: PCT/JP2015/075193
(87) International publication number: WO 2016/039264

(57) **Abstract**

A cathode (2) for a lithium ion secondary battery of the present invention is provided with a current collector (5) and an active material layer (6) formed on a surface of the current collector. The active material layer (6) has holes (7) in its surface and has an active material density of 68 to 83% relative to a true density of an active material included in the active material layer (6). The thickness of the active material layer is 150 to 1000 µm. Hence, the amount of the active material included in the cathode (2) is increased. When the cathode is used in the battery, transfer of an electron and insertion/release of lithium ion take place deep in the thickness direction from the surface and in the surface of the active material layer. Hence, the active material deep in the thickness direction from the surface of the active material layer (6) is effectively utilized. Thus, the lithium ion secondary battery which has a high capacity and can be promptly charged/discharged can be provided.

## Description

### [Technical Field]

The present invention relates to a cathode for a lithium ion secondary battery and a lithium ion secondary battery.

### [Background Arts]

A lithium ion secondary battery is drawing an attention as a secondary battery having a high capacity. In order to enhance performance of the lithium ion secondary battery, many developments have been made (see, Patent Documents 1 to 6).

Patent Document 1 discloses an electrode comprising a current collecting layer having an electric conductivity and formed in a form of a thin film, an active material layer having a concave-convex surface formed on the opposite side to the current collecting layer, and an adhesive layer to adhere the current collecting layer and the active material layer. In the electrode disclosed in Patent Document 1, the distance from the surface of the active material layer to the current collecting layer in the concave portion of the active material layer is short, so that an internal resistance is decreased.

Patent Document 2 discloses a cathode sheet provided on a surface of a metal-foil current collector with a mixed cathode material comprising an active material, an electric conductive material, and an adhesive. The mixed cathode material is applied with a coating amount of 15 mg/cm² per one surface. The density of the mixed cathode material is 2.5 g/cm³. In addition, the cathode sheet has a small hole and/or a slit penetrating the current collector and the mixed cathode material. The cathode sheet is stacked with an anode sheet through a separator to form an electrode body. In Patent Document 2, it is disclosed that due to the small hole formed in the cathode sheet, gases accumulated in the mixed cathode material are discharged to outside the electrode body thereby increasing safety of the lithium ion secondary battery.

Patent Document 3 discloses a cathode comprising an active material layer having the thickness of 100 µm and a void ratio of approximately 30% and a cathode current collector formed on a surface of the active material layer. The cathode is formed with a hole penetrating the layer and the collector. In Patent Document 3, it is disclosed that by forming the hole in the cathode a capability of impregnating an electrolyte solution and a capability of drying an adhesive can be secured.

Patent Document 4 discloses an active material layer having the thickness of approximately 50 µm. A first mixed material layer region having a low void ratio and a second mixed material layer region having a high void ratio are alternately formed on a surface of a current collector thereby having different void ratios in accordance with the position in the direction along the surface of the current collector. In Patent Document 4, it is disclosed that because a lithium ion migrates in the second mixed material layer region having a high void ratio, migration resistance of the lithium ion decreases, so that by using this active material layer as an electrode of a lithium ion secondary battery, an internal resistance is decreased.

Patent Document 5 discloses an electrode for a lithium ion secondary battery. The thickness of an active material layer is made to 80 µm or less, the void ratio of the active material layer in the current collector side is made to 30 to 50%, and the void ratio thereof in the separator side is made to 50 to 60%. In Patent Document 5, it is disclosed that by using this electrode for a lithium ion secondary battery, amount of an electrolyte solution in the electrode is increased thereby increasing a capability of transporting a lithium ion in the direction of film thickness in the electrolyte solution in the electrode so that an output density can be further increased.

Patent Document 6 discloses a cathode for a lithium ion secondary battery comprising an active material layer having a weight of 50 mg/cm² and a thickness of approximately 140 µm, formed on a surface of a current collector. The active material layer includes LiCoO₂, a carbon material, and polyvinylidene fluoride with the weight ratio of 95 : 2.5 : 2.5, and is formed with many independent holes such that they do not penetrate through the current collector.

### [Citation List]

### [Patent Documents]

Patent Document 1: Japanese Patent Laid-Open Publication No. 2013-187468 (paragraphs [0007] and [0008])
Patent Document 2: Japanese Patent Laid-Open Publication No. 2001-6749 (paragraphs [0010], [0023], [0026], and [0057])
Patent Document 3: Japanese Patent Laid-Open Publication No. H10-326628 (paragraphs [0018], [0024], and [0070])
Patent Document 4: Japanese Patent Laid-Open Publication No. 2013-8523 (paragraph [0010])
Patent Document 5: Japanese Patent Laid-Open Publication No. 2002-151055 (claims 1 to 5)
Patent Document 6: Japanese Patent Laid-Open Publication No. 2007-250510 (claim 1 and paragraphs [0023] and [0024])

### [Summary of the Invention]

### [Problems to be Solved by the Invention]

However, in the electrode disclosed in Patent Document 1, the decrease in the internal resistance is approximately 3 to 16% as compared with the case not having the concave-convex formed, so that the decrease in the internal resistance may be insufficient. In addition, in this electrode, because the internal resistance increases with an increase in the thickness of the active material layer, amount of the active material to be supported thereto with an aim to lower the internal resistance cannot be increased by the increase in the thickness of the active material layer. Accordingly, in this electrode, it is difficult to increase the capacity of the battery.

In the cathode sheet disclosed in Patent Document 2, the mixed cathode material includes 10 parts by mass of each of the conductive material and the adhesive relative to 80 parts by mass of the active material. In this cathode sheet, density of the active material in the mixed cathode material is 2.5 g/cm³, which is lower as compared to approximately 4.2 g/cm³, which is a true density of lithium manganite, i.e., the active material included in the mixed cathode material, so that the active material supported thereto is small. The active material density in the mixed cathode material is approximately 59% relative to the true density of the active material. Therefore, the capacity per volume of the lithium ion secondary battery using this cathode sheet is small.

In the cathode disclosed in Patent Document 3, the void ratio is approximately 30%, and the active material layer includes 87% by weight of lithium cobaltate, 8% by weight of graphite powder, and 5% by weight of polyvinylidene fluoride; and thus, the active material density is low. In addition, in this cathode, thickness of the active material layer is 100 µm, so that the active material supported is small. Therefore, the capacity per volume of the lithium ion secondary battery using this cathode sheet is small.

In the active material layer disclosed in Patent Document 4, the second mixed material layer regions having a higher void ratio in which a lithium ion migrates preferentially are formed in the form of a slit. In this active material layer, because the active material density in the second mixed material layer region is low, there occurs a problem that the average entire active material density decreases. Therefore, in the lithium ion secondary battery using this active material layer, the energy density (charge/discharge capacity) per volume cannot be increased.

In the electrode for a lithium ion secondary battery disclosed in Patent Document 5, the thickness of the active material layer is 20 to 80 µm and the void ratio thereof in the separator side is in the range of not less than 50 to not more than 60%, so that the active material density is low. Therefore, in the lithium ion secondary battery using this electrode, there is a problem that the energy density (charge/discharge capacity) per volume is low.

In the cathode for a lithium ion secondary battery disclosed in Patent Document 6, the thickness of the active material layer is approximately 140 µm, which is thicker than approximately 100 µm, the thickness of a conventional active material layer. However, because the active material layer density is not clear, there is a possibility that the capacity of the lithium ion secondary battery using this cathode is not sufficiently large.

As discussed above, it has been difficult to prepare the lithium ion secondary battery having a high capacity and a low internal resistance.

Accordingly, in view of the problems described above, an object of the present invention is to provide a cathode for a lithium ion secondary battery which has a high capacity and can be promptly charged and discharged and a lithium ion secondary battery.

### [Means for Solving the Problems]

According to a first aspect of the present invention, a cathode for a lithium ion secondary battery comprises a current collector and an active material layer formed on a surface of the current collector. The active material layer has a plurality of holes formed in its surface. The active material density is 68 to 83% of a true density of an active material included in the active material layer. The thickness of the active material layer is 150 to 1000 µm.

According to a second aspect of the present invention, the invention is on the basis of the first aspect, the active material layer includes LiCoO₂ as the active material, and the active material density is 3.45 to 4.19 g/cm³.

According to a third aspect of the present invention, the invention is on the basis of the first aspect, the active material layer includes Li(NiₓMn_{y}Co_{z})O₂ (however, 0<x<1.0, 0<y<1.0, 0<z<1.0, and x+y+z=1.0), and the active material density is 3.12 to 3.81 g/cm³.

According to a fourth aspect of the present invention, the invention is on the basis of the first aspect, the active material layer includes LiMn₂O₄ as the active material, and the active material density is 2.86 to 3.48 g/cm³.

According to a fifth aspect of the present invention, the invention is on the basis of the first aspect, the active material layer includes LiNiO₂ as the active material, and the active material density is 3.26 to 3.98 g/cm³.

According to a sixth aspect of the present invention, the invention is on the basis of the first aspect, the active material layer includes LiNi_{0.8}CO_{0.15}Al_{0.05}O₂ as the active material, and the active material density is 3.33 to 4.06 g/cm³.

According to a seventh aspect of the present invention, the invention is on the basis of the first aspect, the active material layer includes LiFePO₄ as the active material, and the active material density is 2.45 to 2.98 g/cm³.

According to an eighth aspect of the present invention, the invention is on the basis of the first aspect, the active material layer includes two or more selected from LiCoO₂ Li(NiₓMn_{y}Co_{z})O₂ (provided that 0<x<1.0, 0<y<1.0, 0<z<1.0, and x+y+z=1.0), LiMn₂O₄, LiNiO₂, LiNi₀.₈Co₀.₁₅Al₀.₀₅O₂, and LiFePO₄ as the active material, and the active material density is in the range of more than 2.45 to less than 4.19 g/cm³.

According to a ninth aspect of the present invention, the invention is on the basis of any one of the first aspect to the eighth aspect, the active material layer includes 0.5 to 10% by weight of a conduction assisting agent and 0.5 to 10% by weight of a binder.

According to a tenth aspect of the present invention, the invention is on the basis of any one of the first aspect to the ninth aspect, and the maximum diameter of the plurality of holes is 5 to 2000 µm.

According to an eleventh aspect of the present invention, the invention is on the basis of any one of the first aspect to the tenth aspect, and a distance between centers of the plurality of holes is 500 to 8000 µm.

According to a twelfth aspect of the present invention, the invention is on the basis of any one of the first aspect to the eleventh aspect, a shape of an opening of the plurality of holes is one or more shapes selected from a circle, a triangle, a quadrangle, and a polygon of a pentagon or higher.

According to a thirteenth aspect of the present invention, the invention is on the basis of any one of the first aspect to the twelfth aspect, depths of the plurality of holes are 5% or more relative to the thickness of the active material layer.

According to a fourteenth aspect of the present invention, the invention is on the basis of any one of the first aspect to the thirteenth aspect, and the plurality of holes have bottom portions formed by the current collector.

According to a fifteenth aspect of the present invention, the invention is on the basis of any one of the first aspect to the thirteenth aspect, the active material layers are formed on both surfaces of the current collector; and the plurality of holes have openings in the surface of one of the active material layer, penetrate through the active material layer and the current collector, and have bottom portions formed by other of the active material layer.

According to a sixteenth aspect of the present invention, the invention is on the basis of the fifteenth aspect, the plurality of holes include a hole which has an opening in the surface of the other of the active material layer, penetrates through the active material layer and the current collector, and has a bottom portion formed by the one of the active material layer; and the hole having an opening in the surface of the one of the active material layer and the hole having an opening in the surface of the other of the active material layer are formed alternately.

According to a seventeenth aspect of the present invention, a lithium ion secondary battery comprises the cathode for a lithium ion secondary battery based on any one of the first aspect to the sixteenth aspect.

### [Advantageous Effects of Invention]

The cathode for a lithium ion secondary battery according to the first aspect of the present invention comprises a current collector and an active material layer formed on a surface of the current collector. In the active material layer, a plurality of holes are formed in the surface, the active material density is 68 to 83% relative to a true density of an active material included in the active material layer, and the thickness is 150 to 1000 µm. Therefore, the cathode has more amount of the active material, so that when the cathode is used in a lithium ion secondary battery, not only in the surface of the active material layer but also in the position deep in the thickness direction from the surface of the active material layer, transfer of an electron and insertion and release of a lithium ion take place; and thus, the active material present in the position deep in the thickness direction from the surface of the active material layer can be effectively utilized. In addition, because the migration distance of the lithium ion in the cathode is not excessively long, the active material can be utilized more effectively; and thus, the lithium ion secondary battery having a high capacity can be provided. In addition, when the cathode for a lithium ion secondary battery is used in the lithium ion secondary battery, because the lithium ion released from the active material in the position deep in the thickness direction from the surface of the active material layer can migrate in an electrolyte solution that is present in the hole, an internal resistance of the battery is low; and thus, the lithium ion secondary battery which can be promptly charged and discharged and has a high output power can be provided.

In the cathode for a lithium ion secondary battery according to the second aspect of the present invention, the active material layer includes LiCoO₂ as the active material and the active material density is 3.45 to 4.19 g/cm³; and thus, the cathode has the active material highly densely, so that the lithium ion secondary battery having a high capacity can be provided.

In the cathode for a lithium ion secondary battery according to the third aspect of the present invention, the active material layer includes Li(NiₓMn_{y}Co_{z})O₂ (provided that, 0<x<1.0, 0<y<1.0, 0<z<1.0, and x+y+z=1.0) and the active material density is 3.12 to 3.81 g/cm³; and thus, the cathode has the active material highly densely, so that the lithium ion secondary battery having a high capacity can be provided.

In the cathode for a lithium ion secondary battery according to the fourth aspect of the present invention, the active material layer includes LiMn₂O₄ as the active material and the active material density is 2.86 to 3.48 g/cm³; and thus, the cathode has the active material highly densely, so that the lithium ion secondary battery having a high capacity can be provided.

In the cathode for a lithium ion secondary battery according to the fifth aspect of the present invention, the active material layer includes LiNiO₂ as the active material and the active material density is 3.26 to 3.98 g/cm³; and thus, the cathode has the active material highly densely, so that the lithium ion secondary battery having a high capacity can be provided.

In the cathode for a lithium ion secondary battery according to the sixth aspect of the present invention, the active material layer includes LiNi_{0.8}Co_{0.15}Al_{0.05}O₂ as the active material and the active material density is 3.33 to 4.06 g/cm³; and thus, the cathode has the active material highly densely, so that the lithium ion secondary battery having a high capacity can be provided.

In the cathode for a lithium ion secondary battery according to the seventh aspect of the present invention, the active material layer includes LiFePO₄ as the active material and the active material density is 2.45 to 2.98 g/cm³; and thus, the cathode has the active material highly densely, so that the lithium ion secondary battery having a high capacity can be provided.

In the cathode for a lithium ion secondary battery according to the eighth aspect of the present invention, the active material layer includes two or more types of the active materials selected from LiCoO₂, Li(NiₓMn_{y}Co_{z})O₂ (provided that 0<x<1.0, 0<y<1.0, 0<z<1.0, and x+y+z=1.0), LiMn₂O₄, LiNiO₂, LiNi_{0.8}Co_{0.15}Al_{0.05}O₂, and LiFePO₄, and the active material density is in the range of more than 2.45 to less than 4.19 g/cm³; and thus, the cathode has the active material highly densely, so that the lithium ion secondary battery having a high capacity can be provided.

In the cathode for a lithium ion secondary battery according to the ninth aspect of the present invention, the active material layer includes 0.5 to 10% by weight of a conduction assisting agent and 0.5 to 10% by weight of a binder; and thus, without reducing the amount of the active material to be supported, not only the active material can be bound sufficiently but also a sufficient conductivity can be obtained.

In the cathode for a lithium ion secondary battery according to the tenth aspect of the present invention, the maximum diameter of the plurality of holes is 5 to 2000 µm; and thus, in the lithium ion secondary battery using this cathode, the diameters of the holes are suitable for migration of the lithium ion, so that the lithium ion secondary battery which has a further high capacity and can be promptly charged and discharged can be provided.

In the cathode for a lithium ion secondary battery according to the eleventh aspect of the present invention, the distance between centers of the plurality of holes is 500 to 8000 µm; and thus, the number of the holes and distance among the holes are more suitable, so that the lithium ion secondary battery which has a further high capacity and can be promptly charged and discharged can be provided.

In the cathode for a lithium ion secondary battery according to the twelfth aspect of the present invention, the shape of an opening of the plurality of holes is one or more shapes selected from a circle, a triangle, a quadrangle, a pentagon, and a polygon with the number of vertices greater than 5; and thus, the shape of the hole can be made suitable for a cell reaction, so that the lithium ion secondary battery which has a further high capacity and can be promptly charged and discharged can be provided.

In the cathode for a lithium ion secondary battery according to the thirteenth aspect of the present invention, each of the depths of the plurality of holes is 5% or more relative to the thickness of the active material layer; and thus, the depths of the holes can be made suitable for a cell reaction; and thus, the active material that is present in the position deep in the thickness direction from surface of the active material layer can also be utilized effectively. As a consequence, the lithium ion secondary battery which has a further high capacity and can be promptly charged and discharged can be provided.

In the cathode for a lithium ion secondary battery according to the fourteenth aspect of the present invention, the plurality of holes have bottom portions formed by the current collector; and thus, the holes are not formed in the current collector, so that the current collector is resistant to breakage in manufacturing processes of the cathode for a lithium ion secondary battery and of the battery. As a consequence, the cathode for a lithium ion secondary battery and the battery can be efficiently manufactured.

In the cathode for a lithium ion secondary battery according to the fifteenth aspect of the present invention, the active material layers are formed on both surfaces of the current collector, and the plurality of holes have openings on the surface of one of the two active material layers, penetrate through the active material layer and the current collector, and have bottom portions formed by other of the active material layers; and thus, as compared with the case that the bottom portions are formed by the current collector, the surface area of the active material layer is increased by the surface area of the bottom portions, so that the active material readily contributable to a cell reaction increases, and therefore the charging and discharging can be done more efficiently. In addition, in the cathode for a lithium ion secondary battery, a plurality of holes have bottom portions, and depths of the holes are deeper, thereby having a higher liquid-retention property; and thus, even when an electrolyte solution is moved to one side due to tilting of a battery, the electrolyte solution can be retained in the holes. As a consequence, the lithium ion secondary battery which does not likely to cause the performance deterioration can be provided.

In the cathode for a lithium ion secondary battery according to the sixteenth aspect of the present invention, the plurality of holes include a hole which has an opening on the surface of the other of the active material layer, penetrates through the active material layer and the current collector, and has a bottom portion formed by the one of the active material layer; and the hole having an opening on the surface of the one of the active material layer and the hole having an opening on the surface of the other of the active material layer are formed alternately. Accordingly, the lithium ion secondary battery having a stack of cathodes and anodes can be charged and discharged more efficiently because the openings of the holes face the separator.

The lithium ion secondary battery according to the seventeenth aspect of the present invention comprises the cathode for a lithium ion secondary battery based on any one of the first aspect to the sixteenth aspect; and thus, the battery has a high capacity and can be promptly charged and discharged.

### [Brief Description of the Drawings]

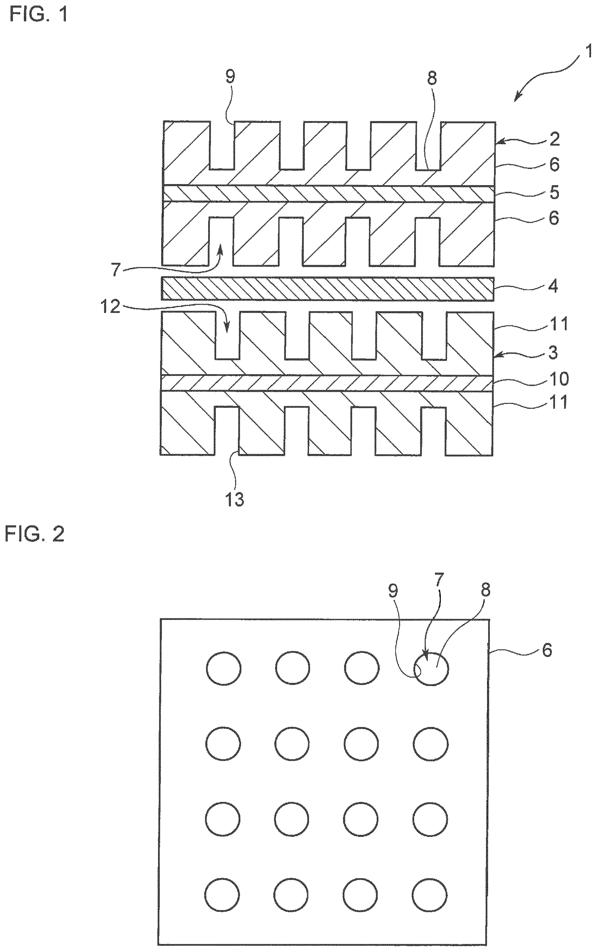

FIG. 1 is a schematic end view showing a longitudinal sectional view of the electrode structure of the lithium ion secondary battery according to an embodiment of the present invention.
FIG. 2 is a plan view showing an arrangement of openings of holes on a surface of an active material layer according to an embodiment of the present invention.

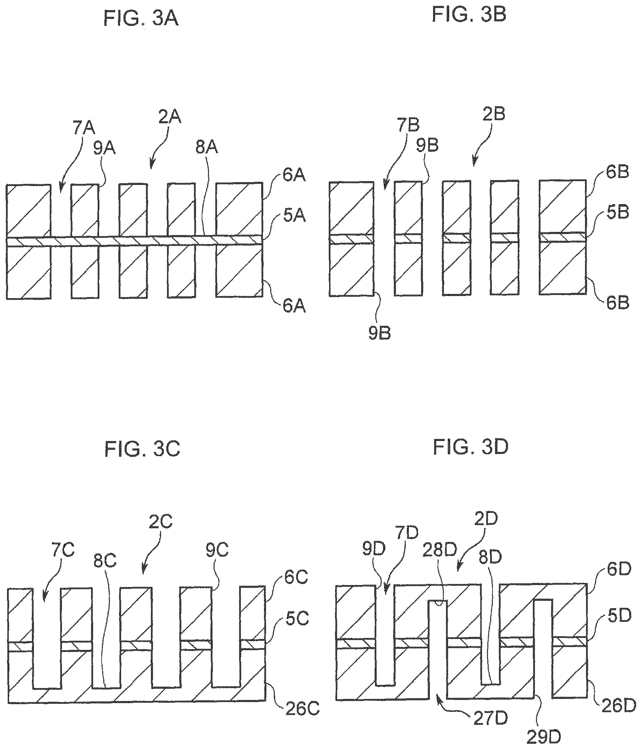

FIGs. 3A to 3D are schematic end views showing longitudinal sectional views of the cathodes for a lithium ion secondary battery according to modified embodiments of the present invention: FIG. 3A shows a cathode having the holes whose bottom portions are included in a current collector; FIG. 3B shows a cathode having the holes penetrating the active material layer and the current collector; FIG. 3C shows a cathode having the holes which have openings on the surface of one of the active material layers, penetrate through the active material layer and the current collector, and have bottom portions formed by the other of the active material layers; and FIG. 3D shows a cathode wherein the hole which has an opening on the surface of one of the active material layers, penetrates through the active material layer and the current collector, and has a bottom portion formed by the other of the active material layers, and the hole which has an opening in the surface of the other of the active material layer, penetrates through the active material layer and the current collector, and has a bottom portion formed by the one of the active material layers are formed alternately.

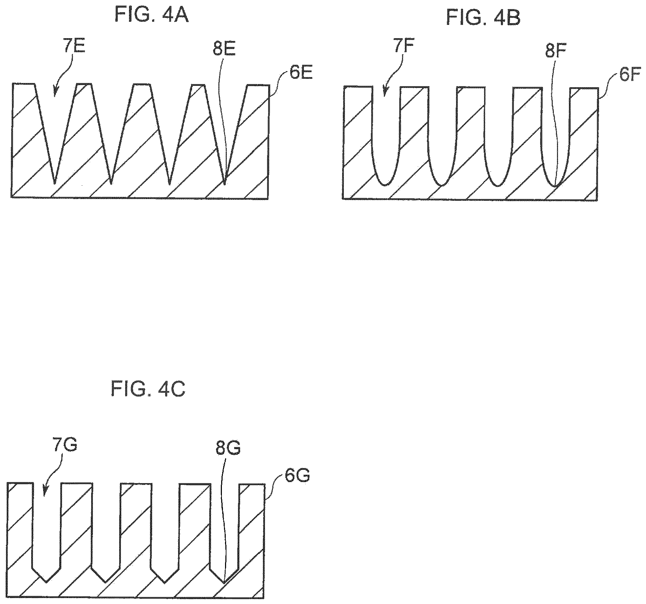

FIGs. 4A to 4C are schematic end views showing the longitudinal sectional shapes of the active material layers according to the modified embodiment of the present invention: FIG. 4A shows an active material layer formed with the holes having a triangle shape in the longitudinal sectional view; FIG. 4B shows an active material layer formed with the holes having a U-shape in the longitudinal sectional view; and FIG. 4C shows an active material layer formed with the holes having a pentagonal shape in the longitudinal sectional view.

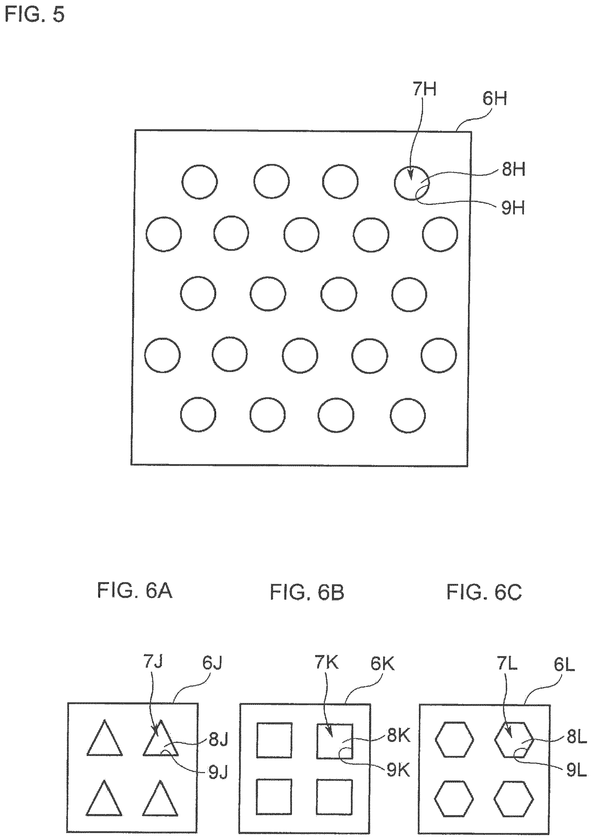

FIG. 5 is a plan view showing a schematic arrangement of the holes in the surface of the active material layer according to a modified embodiment of the present invention.
FIGs. 6A to 6C are plan views showing a schematic arrangement of the holes in the surface of the active material layers according to modified embodiments of the present invention: FIG. 6A shows the active material layers having the holes with the opening shape of a triangle; FIG. 6B shows the opening shape of a quadrangle; and FIG. 6C shows the opening shape of a hexagon.

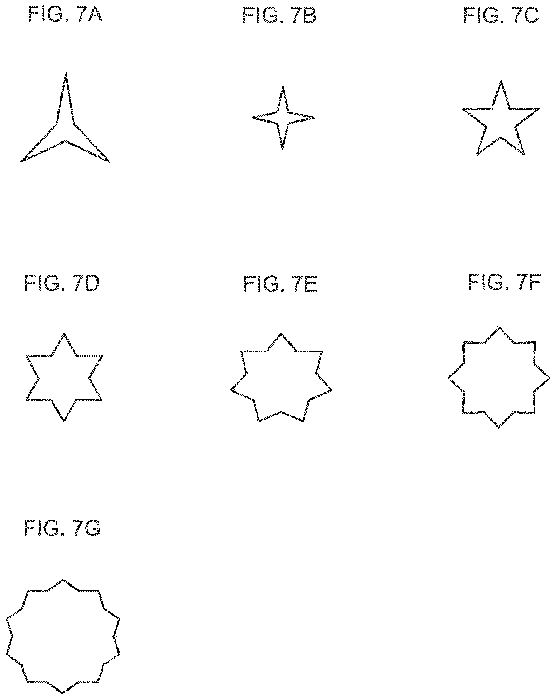

FIGs. 7A to 7G are plan views of the opening shapes of the holes which are formed in the active material layers according to modified embodiment of the present invention: shown therein are the opening having the star shape; the number of points are 3 (FIG. 7A), 4 (FIG. 7B), 5 (FIG. 7C), 6 (FIG. 7D), 7 (FIG. 7E), 8 (FIG. 7F), and 10 (FIG. 7G).

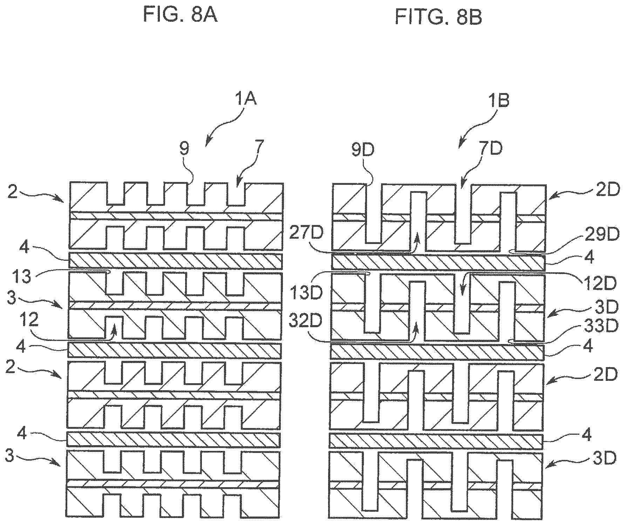

FIGs. 8A and 8B are schematic end views showing longitudinal sectional views of the electrode structures of the lithium ion secondary battery according to the modified embodiments of the present invention: shown therein are the electrode structure of the lithium ion secondary battery in which a plurality of the cathodes and anodes, both formed with the holes on the both surfaces, are stacked (FIG. 8A); and a plurality of the cathodes and anodes are stacked and the hole having the opening on the upper surface and the hole having the opening on the bottom surface are alternately arranged (FIG. 8B).

### [Description of the Embodiments]

Hereinafter, embodiments of the present invention will be described in detail with reference to drawings.

### 1. Configuration of lithium ion secondary battery according to embodiments of the present invention

As illustrated in FIG. 1, a lithium ion secondary battery 1 comprises a cathode 2 for a lithium ion second battery of the present invention (hereinafter, referred to as cathode 2), an anode 3, and a separator 4. The cathode 2 and the anode 3 are arranged so that they face each other through the separator 4. The cathode 2, the anode 3, and the separator 4 are immersed in an electrolyte solution, which is a mixture of a non-aqueous solvent such as EC (ethylene carbonate), DEC (diethyl carbonate), DMC (dimethyl carbonate), or MEC (methyl ethyl carbonate), with a lithium salt such as LiPF₆, LiBF₄, and LiClO₄.

In the cathode 2, holes 7 having openings 9 are disposed in the surface of the cathode 2. In the cathode 2, the opening 9 of the hole 7 is disposed to face the separator 4.

In the anode 3, active material layers 11 are disposed on both surfaces of the current collector 10. Similar to the cathode 2, holes 12 having openings 13 are disposed in the surface of the anode 3. The hole 12 formed in the anode 3 is disposed to face the opening 9 of the hole 7 of the cathode 2 through the separator 4. The opening 9 of the hole 7 formed in the cathode 2 and the opening 13 of the hole 12 formed in the anode 3 are not necessarily arranged to face with each other. However, it is preferable that one or more openings 9 of the holes 7 face one or more openings 13 of the holes 12. When the hole 7 and the hole 12 are arranged to face each other, a lithium ion and a counter ion thereof (for example, PF₆⁻ ion) migrate smoothly between the hole 7 of the cathode 2 and the hole 12 of the anode 3, so that a cell reaction is facilitated furthermore.

The anode 3 is not particularly limited, so that publicly known anodes for a lithium ion secondary battery may be used. The anode 3 may be, for example, a conventional composite electrode which has active material layers of a mixed material including an active material. The active material layers are disposed on both surfaces of the current collector.

### 2. Configuration of cathode for of a lithium ion secondary battery according to embodiments of the present invention

As illustrated in FIG. 1, the cathode 2 includes the current collector 5 and two active material layers 6. The active material layers 6 are formed on both surfaces of the current collector 5. The current collector 5 is a plate-shaped member, preferably a member having a thin film shape with the thickness of 5 to 20 µm. The size, shape, and the like of the current collector 5 may vary in accordance with the lithium ion secondary battery to be prepared. The current collector 5 is not particularly limited as long as the current collector 5 is not affected by a chemical reaction that takes place during charging and discharging of the battery and the current collector 5 is made of a member having electric conductivity. For example, a foil made of aluminum, copper, silver, gold, platinum, nickel, titanium, iron, stainless steel, or the like may be used as the current collector 5. An unwoven cloth made of metal fibers or carbon fibers may be used as the current collector 5.

The active material layer 6 is made from a mixture including an active material, a conduction assisting agent, and a binder. The mixture is commonly called as a mixed material. The active material layer 6 includes 80.0 to 99.0% by weight of the active material, 0.5 to 10.0% by weight of the conduction assisting agent, and 0.5 to 10.0% by weight of the binder, provided that the total mass of the active material, the conduction assisting agent, and the binder is considered to be 100% by weight. It is preferable that the active material and so forth be included at the ratio described above. However, the ratio may be changed as long as the active material is included at the active material density which will be described below.

One or more selected from LiCoO₂ (hereinafter, referred to as LCO), Li(NiₓMn_{y}Co_{z})O₂ (provided that 0<x<1.0, 0<y<1.0, 0<z<1.0, and x+y+z=1.0) (hereinafter, referred to as the ternary cathode material or ternary cathode), LiMn₂O₄ (hereinafter, referred to as LMO), LiNiO₂ (hereinafter, referred to as LNO), LiNi_{0.8}Co_{0.15}AL_{0.05}O₂ (hereinafter, referred to as NCA), LiFePO₄ (hereinafter, referred to as LFP), and the like may be used as the active material. Acetylene black (hereinafter, referred to as AB), Ketjen black (hereinafter, referred to as KB), carbon nanotubes (hereinafter, referred to as CNT), or the like may be used the conduction assisting agent. Polyvinylidene fluoride (hereinafter, referred to as PVDF) or the like may be used the binder.

The active material layer 6 includes the active material at the active material density of 68 to 83% relative to a true density of the active material. The active material density represents the amount of the active material included per unit volume of the active material layer 6. The active material layer 6 includes the active material preferably at the active material density of 70 to 83% relative to the true density, and more preferably at the active material density of 73 to 83% relative to the true density. In a case where the ratio of the active material density relative to the true density is higher, the cathode 2 supports more amount of the active material. In a case where the hole 7 is formed, the electrolyte solution can reach a position deep in the depth direction of the active material layer 6, and thus, the lithium ion reaches more active materials than the case not formed with the hole 7. As a result, more amount of the active material that is supported on the active material layer 6 is effectively utilized, and thus, the lithium ion secondary battery having a higher capacity is provided. In the cathode 2, since the lithium ion migrates in the electrolyte solution in the hole 7, the lithium ion secondary battery more reliably achieves a high capacity and fast charging and discharging.

In a case where the ratio of the active material density relative to the true density in the active material layer 6 is less than 68%, it is likely that the electrolyte solution reaches inside the active material layer 6 even when the hole 7 is not formed in the active material layer 6. Therefore, even when the hole 7 is formed in the active material layer 6, the amount of active material that is utilized only after the hole 7 is formed may be so small that the discharge capacity is unlikely to increase.

In a case where the ratio of the active material density relative to the true density of the active material layer 6 is more than 83%, since the active material density is extremely high, voids in the active material layer 6 is small. Hence, migration of the lithium ion in the active material layer 6 is difficult. Consequently, even when the hole 7 is formed in the active material layer 6, only the active material that is exposed to an inner space of the hole 7 can be utilized, and thus, the active material inside the active material layer cannot be effectively utilized. Therefore even though the supported amount of the active material is increased, the discharge capacity is unlikely to increase.

For example, when LCO is used as the active material, since the true density of LCO is 5.05 g/cm³, the active material density of the active material layer 6 is 3.45 to 4.19 g/cm³.

When the ternary cathode material is used as the active material, since the true density of the ternary cathode material is 4.6 g/cm³, the active material density of the active material layer 6 is 3.12 to 3.81 g/cm³. Here, the true density of the ternary cathode material having the composition of Li(Ni_{1/3}Mn_{1/3}Co_{1/3})O₂ is used. The true density of the ternary cathode material is approximately the same as above even when the composition of the ternary cathode material is different.

When LMO is used as the active material, since the true density of LMO is 4.2 g/cm³, the active material density of the active material layer 6 is 2.86 to 3.48 g/cm³.

When LNO is used as the active material, since the true density of LNO is 4.8 g/cm³, the active material density of the active material layer 6 is 3.26 to 3.98 g/cm³.

When NCA is used as the active material, since the true density of NCA is 4.9 g/cm³, the active material density of the active material layer 6 is 3.33 to 4.06 g/cm³.

When LFP is used as the active material, since the true density of LFP is 3.6 g/cm³, the active material density of the active material layer 6 is 2.45 to 2.98 g/cm³.

When two or more types of the active material are used, the true density of the mixture of the active materials is higher than 3.6 g/cm³, which is the true density of the active material including 100% of LFP having the lowest true density, and lower than 5.05 g/cm³, which is the true density of the active material including 100% of LCO having the highest true density. Therefore, the active material density of the active material layer 6 in this case is in the range of more than 2.45 g/cm³ and less than 4.19 g/cm³.

The active material layer 6 is disposed on the surface of the current collector 5. The active material layer 6 has a thin film shape. In the active material layer 6, a plurality of the holes 7 are formed. The hole 7 has the opening 9 on the surface of the active material layer 6 and is formed in the direction from the surface to the current collector 5. In this embodiment, the hole 7 has a bottom portion 8 formed by the face of the active material layer 6 contacting the current collector 5. Namely, the hole 7 does not penetrate through the current collector 5 but the bottom portion 8 is formed by (included in) the active material layer 6. The hole 7 has a cylindrical shape with a quadrangular longitudinal sectional shape.

The thickness of the active material layer 6 is 150 to 1000 µm. When the thickness of the active material layer 6 is 150 to 1000 µm, the cathode 2 can support a sufficient amount of active material; and thus, the lithium ion secondary battery having a large cell capacity can be provided. And when the cathode 2 is used in the lithium ion secondary battery, the migration distances of the lithium ion and a counter ion thereof (for example, PF₆⁻ ion) are not so long, so that the charging/discharging characteristics of the lithium ion secondary battery can be enhanced.

The thickness of the active material layer 6 is more preferably 500 to 1000 µm. When the thickness of the active material layer 6 is 500 to 1000 µm, the cathode 2 more reliably provides the lithium ion secondary battery which has a high capacity and can be promptly charged and discharged.

As illustrated in FIG. 2, the shape of the opening 9 of the hole 7 is a circle (round shape). The holes 7 are arranged such that the openings 7 are disposed at equal intervals in lengthwise and crosswise directions on the surface of the active material layer 6.

The maximum diameter of the hole 7 is not particularly limited, but preferably 5 to 2000 µm. In a case where the maximum diameter of the hole 7 is 5 to 2000 µm, when the cathode 2 is used in the lithium ion secondary battery, the lithium ion can smoothly migrate in the electrolyte solution that is present in the hole 7, so that the rate of the cell reaction can be further enhanced. And in the cathode 2, the number of voids in the active material layer 6 that is reduced by compression upon forming the hole 7 is small, so that the active material that can be effectively utilized is increased by forming the holes 7.

The maximum diameter of the hole 7 is particularly preferably 500 to 2000 µm. In a case where the maximum diameter of the hole 7 is 500 to 2000 µm, when the cathode 2 is used in the lithium ion secondary battery, because of increase in the diameter of the hole 7, the lithium ion can migrate more smoothly in the electrolyte solution that is present in the hole 7, so that the rate of the cell reaction can be further enhanced.

The length between centers of the holes 7 adjacent to each other (holes' center-to-center distance) is not particularly limited; however, it is preferably 500 to 8000 µm. In a case where the holes' center-to-center distance between the holes 7 is 500 to 8000 µm, in the cathode 2, the region that the lithium ion in the electrolyte solution reaches from one of the holes 7 does not overlap, and the region that the lithium ion in the electrolyte solution is difficult to reach in the active material layer 6 decreases; and thus, the active material that can be effectively utilized is increased by forming the holes 7.

The holes' center-to-center distance of the hole 7 is particularly preferably 500 to 4000 µm. In a case where the holes' center-to-center distance of the hole 7 is 500 to 4000 µm, the lithium ion in the electrolyte solution can reach every part of the cathode 2 more readily; and thus, the active material that can be effectively utilized increases.

The depth of the hole 7 is not particularly limited; however, it is preferably 5% or more relative to the thickness of the active material layer 6. In a case where the depth of the hole 7 is 5% or more, the lithium ion in the electrolyte solution can readily reach the position deep in the depth direction of the active material layer 6; and thus, the active material that can be effectively utilized increases.

The depth of the hole 7 is particularly preferably 67% or more relative to the thickness of the active material layer 6. In a case where the depth of the hole 7 is 67% or more, the lithium ion in the electrolyte solution can more readily reach the position deep in the depth direction of the active material layer 6; and thus, the active material that can be effectively utilized increases further.

### 3. Method for producing cathode for lithium ion secondary battery of present invention

A method for producing the cathode 2 for a lithium ion secondary battery will be explained below. An active material, a binder, and a conduction assisting agent are weighed to achieve a predetermined mass ratio. After weighing, the binder is added to a solvent, and the resulting mixture is stirred for a predetermined period of time. Then, the active material and the conducting assisting agent are added to the resulting mixture, and the resulting mixture is stirred, and the viscosity is adjusted, to prepare a cathode slurry. The cathode slurry is the solution used for forming the active material layer 6 on the surface of the current collector 5. The cathode slurry is generally called as a mixture slurry.

Next, the cathode slurry thus prepared is applied onto both surfaces of the current collector 5, which has been formed into a predetermined size; and then, the cathode slurry is dried at a predetermined temperature and for a predetermined period of time to form the active material layer 6. The method for application is not particularly limited; and, for example, a doctor blade method or a die coating method may be used. The active material layer 6 is generally called as a mixed material.

The amount of the active material included in the active material layer 6 is adjusted by changing the viscosity of the cathode slurry and the application thickness of the cathode slurry.

Next, the current collector 5 having formed with the active material layer 6 is introduced into a roll press machine to form the active material layer 6 having a predetermined thickness. The active material density of the active material layer 6 can be adjusted by adjusting the distance (gap) between the rolls of the roll press machine so as to change the thickness of the active material layer 6.

Finally, a jig with many needles closely arranged in a pinholder shape is pressed against the surface of the active material layer 6 to form the holes 7. Thus, the cathode 2 for a lithium ion secondary battery is obtained.

The hole 7 having a small diameter of 500 µm or less may be formed by laser processing. In this method, the size of the hole 7 to be formed can be adjusted by changing the diameter of laser beams. The hole 7 having, for example, the shape of a circular truncated cone may be formed by changing an incidence angle of the laser beam.

### 4. Action and effects

An action of the lithium ion secondary battery 1 using the cathode 2 according to the embodiments of the present invention will be explained. In the lithium ion secondary battery 1, the cathode 2 and the anode 3 are immersed in an electrolyte solution, which is also present in the hole 7 formed in the active material layer 6 of the cathode 2. Because the hole 7 is formed in the active material layer 6, the electrolyte solution is also present in the position deep in the thickness direction from the surface of the active material layer 6.

Firstly, an action of the lithium ion secondary battery 1 at the time of charging will be explained. The voltage is applied between the cathode 2 and the anode 3 through an outer circuit not shown in the drawings. Thereby, the lithium in the active material of the cathode 2 is released as a lithium ion into the electrolyte solution. Because the hole 7 is formed in the active material layer 6 of the cathode 2, this reaction takes place not only in the surface of the active material layer 6 but also in the position deep in the thickness direction from surface of the active material layer 6.

The electron released from the active material migrates to the anode 3 through the outer circuit not shown in the drawings. On the other hand, the lithium ion migrates to the anode 3 through the electrolyte solution, and is inserted into the active material so as to receive the electron. In this way, the lithium ion secondary battery 1 is charged.

Next, an action of the lithium ion secondary battery 1 at the time of discharging will be explained. The cathode 2 and the anode 3 are connected to an outside load not shown in the drawings. Thereby, in the anode 3, the lithium in the active material is released as a lithium ion into the electrolyte solution.

The electron released from the active material migrates from the anode 3 to the cathode 2 through the outside load. The lithium ion is released from the active material and migrates to the cathode 2 through the electrolyte solution. In the cathode 2, the lithium ion is inserted into the active material. Also in this case, because the hole 7 is formed in the active material layer 6, the lithium ion migrates in the electrolyte solution that is present in the hole 7, so that the migration of the lithium ion is facilitated; and thus, the lithium ion is inserted not only in the surface of the active material layer 6 but also in the position deep in the thickness direction of the active material layer 6. In this way, the lithium ion secondary battery 1 is discharged.

In the configuration explained above, the cathode 2 for a lithium ion secondary battery according to the embodiments of the present invention includes the current collector 5 and the active material layer 6 formed on the surface of the current collector 5. The active material layer 6 is configured such that a plurality of the holes 7 are formed in the surface, the active material density is 68 to 83% relative to the true density of the active material included in the active material layer 6, and the thickness is 150 to 1000 µm.

Therefore, because the plurality of the holes 7 are formed in the surface of the active material layer 6, when the cathode 2 is used in the lithium ion secondary battery 1, in addition to the surface of the active material layer 6, migration of the lithium ion is facilitated in the position deep in the thickness direction from the surface of the active material layer 6; and thus, transfer of electron and insertion and release of the lithium ion can take place.

In the cathode 2, the lithium ion that is released from the active material in the position deep in the thickness direction from the surface of the active material layer 6 can migrate in the electrolyte solution that is present in the hole 7.

As a consequence, the cathode 2 for a lithium ion secondary battery according to the embodiments of the present invention supports more amount of the active material. Therefore, the lithium ion secondary battery has a high capacity because a large amount of the supported active material can be effectively utilized, and is rapid in the cell reaction and capable of being promptly charged and discharged, and has a low internal resistance of the cell and a high output.

The cathode 2 for a lithium ion secondary battery according to the embodiments of the present invention can effectively utilize the active material without making the migration distance of the lithium ion too long in the cathode; and thus, the lithium ion secondary battery having a high capacity can be provided.

Because the ion radius of the lithium ion is extremely small, it is considered to be solvated with many solvents in the electrolyte solution, so that the solvated lithium ion has a large migration resistance. In the case of a conventional composite electrode that is formed by drying an electrode paste applied onto the surface of the current collector and does not have the holes formed in the active material layer, when, for example, LiPF₆ is added as the lithium salt into the electrolyte solution, the lithium ion and the PF₆⁻ ion, which is the counter ion of the lithium ion, migrate in the electrolyte solution included in the micropores that are formed among the active materials in the electrode.

In the lithium ion secondary battery using the conventional electrode which does not have the holes formed as described above, the solvated lithium ion (Li⁺) and the PF₆⁻ ion pass through the electrolyte solution that is impregnated into the micropores; and thus, the lithium ion and the PF₆⁻ ion are readily trapped in a narrow portion among the active materials, thereby leading to an increase in the migration resistance.

On the other hand, in the case of the present embodiments, because the hole 7 is formed in the active material layer 6 of the cathode 2, the lithium ion and the PF₆⁻ ion can preferentially pass through the electrolyte solution that is present in the hole 7, which thus constitutes a preferential path through which the ions can rapidly migrate, so that the lithium ion can migrate in the cathode 2 without being hindered.

Accordingly, in the cathode 2 according to the embodiments of the present invention, because the hole 7 is formed, the cell reaction is rapid even in a case where the active material layer 6 supports the active material highly densely; and moreover, even in the case where the active material layer 6 is thickly formed, the cell reaction is rapid.

Conventionally, it has been considered that the most important rate-limiting factor of the cell reaction is the long migration distance of the lithium ion; and thus, in the commercially available lithium ion secondary batteries, the electrode having the thickness of 100 µm or more hardly existed.

Actually, however, as described above, it can be considered that the most significant rate-limiting factor of the cell reaction is the migration resistance at the time when the solvated lithium ion and the PF₆⁻ ion pass through the micropores formed among the active material particles in the composite electrode.

Accordingly, by forming the holes 7 in the surface of the active material layer 6, the lithium ion and the PF₆⁻ ion can smoothly migrate through the electrolyte solution that is impregnated in the hole 7; and thus, the lithium ion can smoothly migrate in the cathode 2, so that the rate of the cell reaction can be made faster. Therefore, the cathode 2 can provide the lithium ion secondary battery that can be promptly charged and discharged.

On the other hand, in the case of the conventional composite electrode not formed with the holes in the active material layer, it is difficult for the lithium ion and the PF₆⁻ ion to reach the position deep in the thickness direction of the electrode, so that the active material that can be effectively utilized has been limited to those that are present in the range of approximately 100 µm from the surface.

Moreover, in a case where the active material density in the composite electrode is increased, the voids in the composite electrode decrease; and thus, the flow of the electrolyte solution in the mixed material becomes difficult, and the narrow portion in the micropores among the active materials becomes further narrower, so that the active material that can be effectively utilized has been limited to the active material that is present in a further shallow position.

On the contrary, in the cathode 2 according to the embodiments of the present invention, even in the case of the thick electrode that has the active material density of as high as 68 to 83% relative to the true density of the active material and is provided with the active material layer 6 having the thickness of 150 to 1000 µm, i.e., even in the case of the thick electrode that supports the active material highly densely, when the thick electrode is used in the lithium ion secondary battery 1, the lithium ion can migrate in the electrolyte solution that is present in the hole 7. And therefore, the lithium ion can migrate to the position deep in the thickness direction of the cathode 2, so that the active material that is present in the position deep in the thickness direction of the cathode 2 can also be effectively utilized.

As discussed above, the lithium ion secondary battery 1 using the cathode 2 for a lithium ion secondary battery according to the embodiments of the present invention has a high capacity and can be promptly charged and discharged.

Conventionally, in order to increase the capacity of the lithium ion secondary battery, a plurality of the cathode and the anode needed to be stacked through the separators.

However, with the cathode 2 for a lithium ion secondary battery of the present invention, the capacity of the battery can be increased by increasing the thickness of the active material layer 6 and by forming the cathode 2 with the increased active material density; and thus, a high capacity battery can be achieved with the single-layer cathode 2, so that the number of the separator 4 is reduced.

In the cathode 2 for a lithium ion secondary battery of the present invention, by making the plurality of the holes 7 having the bottom portions 8, the liquid-retention property of the hole 7 can be enhanced, so that when the cathode 2 is used in the lithium ion secondary battery 1, even when the electrolyte solution is moved to one side by tilting of the lithium ion secondary battery 1, the electrolyte solution can be retained in the hole 7; and thus, deterioration in the performance of the lithium ion secondary battery 1 can be suppressed. In addition, in the cathode 2, by making the hole 7 not penetrating the current collector 5, the current collector 5 can be made resistant to breakage in the manufacturing processes of the cathode 2 and the lithium ion secondary battery 1, so that the cathode 2 and the lithium ion secondary battery 1 can be efficiently manufactured.

### 5. Modified embodiments

The present invention is not limited to the embodiments described above, and thus, variation thereof can be made so far as the variation is within the scope of the present invention.

For example, the active material, the binder, the conduction assisting agent, the electrolyte solution, the separator, the construction material of the current collector, and so forth may be varied.

In the embodiments described above, explanation has been made with regard to the case that the cathode 2 has the hole 7. The opening 9 of the hole 7 is formed on the surface of the active material layer 6 and the bottom portion 8 of the hole 7 is formed by this active material layer 6; however, the present invention is not limited to this case. For example, as illustrated in FIG. 3A, the cathode 2A may have the hole 7A which has the opening 9A on the surface of the active material layer 6A, penetrates through the active material layer 6A, and has the bottom portion 8A formed by the current collector 5A.

As illustrated in FIG. 3B, the cathode 2B may have the hole 7B, which has the opening 9B formed on the surface of one of the two active material layers 6B and on the surface of the other of the two active material layers 6B, and penetrates the current collector 5B, the one of the active material layers 6B, and the other of the active material layers 6B. In this case, in the cathode 2B, in the course of manufacturing the lithium ion secondary battery, the electrolyte solution can be readily introduced into the cathode 2B; and the gas that is generated at the time of a first charging can be readily exhausted.

As illustrated in FIG. 3C, the cathode 2C may have the hole 7C which has the opening 9C formed on the surface of the active material layer 6C, penetrates through the active material layer 6C and the current collector 5C, and has the bottom portion 8C formed by the active material layer 26C. In this case, in the cathode 2C, as compared with the case that the bottom portion 8A of the hole 7A is formed by the current collector 5A, the surface area of the active material layer is increased by the surface area of the bottom portion 8C; and thus, the active material readily contributable to the cell reaction increases, so that the lithium ion secondary battery that can generate the power more efficiently can be provided. In addition, the hole 7C has the bottom portion 8C, and the depth of the hole is deeper as compared with the hole 7; and thus, the liquid-retention property of the hole 7C is higher. Because of this, in the lithium ion secondary battery using the cathode 2C, even when the electrolyte solution is moved to one side due to tilting of the battery, the electrolyte solution can be retained sufficiently in the hole 7C, so that deterioration in the performance does not likely to occur.

As illustrated in FIG. 3D, the cathode 2D includes the holes 7D and 27D. The hole 7D has the opening 9D formed on the surface of the active material layer 6D and penetrates through the active material layer 6D and the current collector 5D. The hole 7D has the bottom portion 8D formed by (included in) the active material layer 26D. The hole 27D has the opening 29D formed on the surface of the active material layer 26D and penetrates through the active material layer 26D and the current collector 5D. The hole 27D has the bottom portion 28D formed by (included in) the active material layer 6D. The holes 7D and the holes 27D may be alternately disposed.

In the embodiments described above, the explanation has been made with regard to the case that the longitudinal sectional shape of the hole 7 is a quadrangle; however, the present invention is not limited to this. The longitudinal sectional shape of the hole 7 may be varied. For example, as illustrated in FIG. 4A, the hole 7E may be formed in the active material layer 6E such that the longitudinal sectional shape is a triangle in which the vertex part of the triangle constitutes the bottom portion 8E. As illustrated in FIG. 4B, the hole 7F may be formed in the active material layer 6F such that the longitudinal sectional shape of an end portion may be a semicircle, in which the peak of the semicircle constitutes the bottom portion 8F. In this modified embodiment, the longitudinal sectional shape of the hole 7F is a U-shape. As illustrated in FIG. 4C, the hole 7G may be formed in the active material layer 6G such that the longitudinal sectional shape of an end portion may be a triangle, in which the vertex of the triangle constitutes the bottom portion 8G. In this modified embodiment, the longitudinal sectional shape of the hole 7G is a pentagon.

The longitudinal sectional shape of the holes 7A, 7B, 7C, 7D, and 27D shown in the modified embodiments may be a triangle, a U-shape, or a pentagon described above. When the hole 7A or the hole 7B has the above-described longitudinal sectional shape, the current collectors 5A or 5B is exposed to the peak (or vertex) present in the deepest portion of the hole, or the hole penetrates the peak (or vertex). Thus, the longitudinal sectional shape may be changed. For example, when the hole 7E, being a penetrating hole, is formed in the cathode 2B, the longitudinal sectional shape is a trapezoid with the lower bottom shorter than the upper bottom.

The holes 7 formed in the active material layer 6 may not necessarily have the same longitudinal sectional shape. The holes 7 having different longitudinal sectional shapes may coexist; and the penetrating hole and the hole 7 having the bottom portion 8 may coexist.

In the embodiments described above, the holes 7 are arranged such that the openings 9 are disposed at equal intervals in lengthwise and crosswise directions on the surface of the active material layer 6; however, the present invention is not limited to this. For example, as illustrated in FIG. 5, the holes 7H may be arranged such that the openings 9H are disposed at equal intervals along the axes that are parallel to the diagonal line on the surface of the active material layer 6H. The holes 7 may be arranged such that the openings 9H are disposed at predetermined intervals along the concentric circles around the center of the active material layer 6.

In the embodiments described above, the explanation has been made with regard to the case that the shape of the opening 9 is a circle (round shape); however, the present invention is not limited to this. The shape of the opening 9 may be varied. For example, the shape of the opening 9J may be a triangle like the hole 7J illustrated in FIG. 6A. The shape of the opening 9K may be a quadrangle like the hole 7K illustrated in FIG. 6B. The shape of the opening 9L may be a hexagon like the hole 7L illustrated in FIG. 6C.

The shape of the opening 9 may be a pentagon, a heptagon, or a polygon with the number of vertices greater than 7. For example, the openings 9 of the holes 7 may have shapes of the stars having approximately 3 to 10 points as illustrated in FIG. 7A to FIG. 7G. All the shapes of the openings 9 of the holes 7 formed in the active material layer 6 may not necessarily be identical. The openings 9 having different shapes may coexist.

The longitudinal sectional shape of the hole 7 and the shape of the surface of the hole 7 in the modified embodiments explained above may be combined. For example, the hole 7 may have the quadrangular-shaped opening 9 and the triangular longitudinal sectional shape. In this case, the hole 7 has the shape of a quadrangular pyramid.

In the embodiments described above, the explanation has been made with regard to the case that the lithium ion secondary battery 1 having a monolayer structure, in which one cathode 2 and one anode 3 are stacked through the separator 4. However, the present invention is not limited to this; and thus, the lithium ion secondary battery having a multilayer structure, in which the cathodes 2 and the anodes 3 are further stacked through the separators 4 may be employed. For example, as illustrated in FIG. 8A, the lithium ion secondary battery 1 A may have a multilayer structure in which the cathodes 2 and the anodes 3 are alternately stacked through the separators 4 to form a four-layer structure. In this case, at each of the separators 4 in the lithium ion secondary battery 1 A, the openings 9 of the holes 7 in one of the cathodes 2 face the openings 13 of the holes 12 in one of the anodes 3 through the separator 4. Hence, the lithium ion can readily migrate between the cathode 2 and the anode 3, so that the battery can be charged and discharged more efficiently.

As illustrated in FIG. 8B, the lithium ion secondary battery 1B may have a multilayer structure in which the cathode 2D and the anode 3D, which has the same shape as the cathode 2D, are stacked in the manner similar to the lithium ion secondary battery 1A. Similar to the above, in the lithium ion secondary battery 1 B, at each of the separators 4, one of the opening 9D of the hole 7D in the cathode 2D, the opening 29D of the hole 27D in the cathode 2D, the opening 13D of the hole 12D in the anode 3D, and the opening 33D of the hole 32D in the anode 3D faces the separator 4, so that the battery is charged and discharged more efficiently.

In the embodiments and modified embodiments described above, the explanation has been made with regard to the case that the active material layers 6 are formed on the respective surfaces of the current collector 5; however, the present invention is not limited to this, and thus, the active material layer 6 may be formed only on one surface of the current collector 5.

### (Example I)

### (1) Preparation of the electrochemical cell

In Examples (may be abbreviated as Ex.) 1 to 6, the cathode for a lithium ion secondary battery of the present invention using LCO as the active material was prepared; and the cathode was used in an electrochemical cell. In the electrochemical cells in Examples 1 to 6, the depths of the holes formed in the active material layer are different, but other configurations are the same. The explanation will be made with regard to the preparation method of the electrochemical cell of Example 1 by way of example.

Firstly, each of LCO, which was used as the active material, PVDF, which was used as the binder, and AB, which was used as the conduction assisting agent, was weighed to achieve the mass ratio of 95 : 3 : 2. Thereafter, the weighed PVDF was added to N-methyl-2-pyrrolidone (NMP), which was used as the solvent, and the resulting mixture was stirred for 20 minutes. Further, LCO and AB were added to the resulting mixture, and the mixture was stirred and the viscosity was adjusted to 5 Pa·s. Thus, the cathode slurry is obtained.

Next, an aluminum foil having the thickness of 15 µm and trimmed to the size of 3 cm x 3 cm was prepared as the current collector. The cathode slurry was applied on one surface of the aluminum foil by using a comma roll coater (product name: Chibi Coater; manufactured by Thank Metal Co., Ltd.), and then dried at 120°C for 1 hour. Thus, the active material layer is formed. Thereafter, the same active material layer was formed on the other surface of the aluminum foil. The thickness of the active material layer thus formed is 350 µm.

Next, the aluminum foil having the active material layers formed on the respective surfaces was compressed by using a roll pressing machine (product name: 5-Ton Air Hydropress; manufactured by Thank Metal Co., Ltd.) such that each active material layer was compressed to the thickness of 300 µm. The needles closely arranged in the pinholder shape were pressed against the surface of one of the active material layers thus compressed, to form the holes having the parameters shown in Table 1. Thereafter, in a similar manner, the needles closely arranged in the pinholder shape were pressed against the surface of the other active material layer compressed, to form a plurality of holes. Thus, the cathode having the active material layers on the both surfaces was prepared. Each active material layer included 120 mg/cm² of LCO with the active material density of 4.0 g/cm³ (79% relative to the true density).

Next, a metal lithium foil was stamped out to obtain two counter electrodes having the same size as the prepared cathode. Two separators made of polyethylene having innumerable fine pores were prepared, and the cathode was disposed between the separators, and the separators having the cathode between them were disposed between the metal lithium foils. The cathode that was sandwiched by the separators and the metal lithium foils was inserted into an aluminum-laminated pack, together with an electrolyte solution obtained by adding 1 M LiPF₄ to a mixed solvent of EC and DEC at the volume ratio of 1:1; and then, the pack was evacuated to obtain a laminate cell. The laminate cell thus obtained was used as the electrochemical cell of Example 1. The effective area of the electrode is 9 cm².

The electrochemical cells of Examples 2 to 6 were prepared in the same way as Example 1. In Example 6, the holes were formed concurrently in the active material layer and in the aluminum foil. Thus, the cathode having the penetrating holes is produced.

For comparison purpose, an electrochemical cell of Comparative Example (may be abbreviated as C. Example or C. Ex.) 1 was prepared. The electrochemical cell of Comparative Example 1 is the same as the electrochemical cell of Example 1, except that the holes were not formed in the active material layer. The data of the cathodes of Example 1 to 6 and Comparative Example 1 are shown in Table 1. All the active material layers of the obtained cathodes have the same active material density as that in Example 1.

**[Table 1]**

| | Example 1 | Example 2 | Example 3 | Example 4 | Example 5 | Example 6 | C. Example 1 |
|---|---|---|---|---|---|---|---|
| Presence of hole | Yes | Yes | Yes | Yes | Yes | Yes | No |
| Shape of hole's opening | Circular | Circular | Circular | Circular | Circular | Circular | - |
| Shape of hole in longitudinal sectional view | Pentagonal | Pentagonal | Pentagonal | Pentagonal | Pentagonal | Pentagonal | - |
| Maximum diameter (µm) of holes | 1000 | 1000 | 1000 | 1000 | 1000 | 1000 | - |
| Type of active material | LCO | LCO | LCO | LCO | LCO | LCO | LCO |
| Multiplier of maximum diameter of holes to get holes' center-to-center distance | 4 | 4 | 4 | 4 | 4 | 4 | - |
| Holes' center-to-center distance (µm) | 4000 | 4000 | 4000 | 4000 | 4000 | 4000 | - |
| Thickness of active material layer (µm) | 300 | 300 | 300 | 300 | 300 | 300 | 300 |
| Depth of hole (µm) | 15 | 30 | 100 | 200 | 300 | 300 | - |
| Ratio (%) of depth of hole to thickness of active material layer | 5 | 10 | 33 | 67 | 100 | 100 | - |
| Means for forming holes | Pinholder | Pinholder | Pinholder | Pinholder | Pinholder | Pinholder | - |
| Presence of penetrating hole formed in current collector | No | No | No | No | No | Yes | No |
| Discharge capacity (mAh/cm2) per area | 6.7 | 8.4 | 12.5 | 22.8 | 31.2 | 31.2 | 5.3 |
| Discharge capacity (mAh/g) per mass | 28 | 35 | 52 | 95 | 130 | 130 | 22 |

In each of Examples 7 to 12, the cathode for a lithium ion secondary battery using LMO as the active material was prepared and used in the electrochemical cell. In the electrochemical cells of Examples 7 to 12, the holes' center-to-center distances of the holes formed in the active material layer are different, but other configurations are the same. The explanation will be made with regard to the preparation method of the electrochemical cell of Example 7 by way of example.

Firstly, each of LMO, which was used as the active material, PVDF, which was used as the binder, and AB, which was used as the conduction assisting agent was weighed to achieve the mass ratio of 94 : 4 : 2. Thereafter, the weighed PVDF was added to NMP, which was used as the solvent, and the resulting mixture was stirred for 20 minutes. Further, LMO and AB were added to the resulting mixture, and the mixture was stirred and the viscosity was adjusted to 7 Pa·s. Thus, the cathode slurry was obtained.

Next, an aluminum foil having the thickness of 15 µm and trimmed to the size of 3 cm x 3 cm was prepared as the current collector. The active material layers were formed on the respective surfaces of the aluminum foil in the same way as Example 1. The thickness of the active material layer thus formed is 1200 µm.

Next, the aluminum foil having the active material layers on the respective surfaces was compressed by using a roll pressing machine such that each active material layer was compressed to the thickness of 1000 µm. In the same way as Example 1, the holes having the parameters shown in Table 2 were formed. Thus, the cathode having the active material layers on the respective surfaces is produced. The active material layer included 340 mg/cm² of LMO with the active material density of 3.4 g/cm³ (81% relative to the true density). By using this cathode, the electrochemical cell was prepared in the same way as Example 1. The electrochemical cells of Examples 8 to 12 were prepared in the same way as Example 7.

For comparison purpose, an electrochemical cell of Comparative Example 2 was prepared. The electrochemical cell of Comparative Example 2 was the same as that of Example 7, except that the holes were not formed in the active material layer. The data of the cathodes of Example 7 to 12 and Comparative Example 2 are shown in Table 2. All the active material layers of the cathodes prepared have the same active material density as that in Example 7.

**[Table 2]**

| | Example 7 | Example 8 | Example 9 | Example 10 | Example 11 | Example 12 | C. Example 2 |
|---|---|---|---|---|---|---|---|
| Presence of hole | Yes | Yes | Yes | Yes | Yes | Yes | No |
| Shape of hole's opening | Star (4 points) | Star (4 points) | Star (4 points) | Star (4 points) | Star (4 points) | Star (4 points) | - |
| Shape of hole in longitudinal sectional view | U-shape | U-shape | U-shape | U-shape | U-shape | U-shape | - |
| Maximum diameter (µm) of holes | 500 | 500 | 500 | 500 | 500 | 500 | - |
| Type of active material | LiMn₂O₄ | LiMn₂O₄ | LiMn₂O₄ | LiMn₂O₄ | LiMn₂O₄ | LiMn₂O₄ | LiMn₂O₄ |
| Multiplier of maximum diameter of holes to get holes' center-to-center distance | 1 | 2 | 4 | 8 | 12 | 16 | - |
| Holes' center-to-center distance (µm) | 500 | 1000 | 2000 | 4000 | 6000 | 8000 | - |
| Thickness of active material layer (µm) | 1000 | 1000 | 1000 | 1000 | 1000 | 1000 | 1000 |
| Depth (µm) of hole | 900 | 900 | 900 | 900 | 900 | 900 | - |
| Ratio (%) of depth of hole to thickness of active material layer | 90 | 90 | 90 | 90 | 90 | 90 | - |
| Means for forming holes | Pinholder | Pinholder | Pinholder | Pinholder | Pinholder | Pinholder | - |
| Presence of penetrating hole formed in current collector | No | No | No | No | No | No | No |
| Discharge capacity (mAh/cm²) per area | 78.9 | 81.6 | 86.4 | 77.5 | 61.9 | 47.6 | 11.6 |
| Discharge capacity (mAh/g) per mass | 116 | 120 | 127 | 114 | 91 | 70 | 17 |

In Examples 13 to 18, the cathode for a lithium ion secondary battery using the ternary cathode material as the active material was prepared, and the cathode was used in the electrochemical cell. In the electrochemical cells of Examples 13 to 18, the maximum diameters of the holes formed in the active material layer are different, and the methods for making the holes and the depths are different between Examples 13 to 15 and Examples 16 to 18, but other configurations are the same. The explanation will be made with regard to the preparation method of the electrochemical cell of Example 13 by way of example.

Firstly, each of the ternary cathode material, which was used as the active material, PVDF, which was used as the binder, and KB, which was used as the conduction assisting agent, was weighed to achieve the mass ratio of 97 : 2 : 1. Thereafter, the weighed PVDF was added to NMP, which was used as the solvent, and the resulting mixture was stirred for 20 minutes. Further, the ternary cathode material and KB were added to the resulting mixture, and the mixture was stirred and the viscosity was adjusted to 5 Pa·s to obtain the cathode slurry.

Next, an aluminum foil having the thickness of 15 µm and trimmed to the size of 3 cm x 3 cm was prepared as the current collector; and then, the active material layers were formed on the respective surfaces of the aluminum foil in the same way as Example 1. The thickness of the active material layer thus formed is 210 µm.

Next, the aluminum foil having the active material layers formed on both surfaces was compressed by using a roll pressing machine. Thereby, each active material layer was compressed to the thickness of 150 µm. The holes having the parameters shown in Table 3 were formed by a laser beam with the diameter of 5 µm with the use of a laser processing machine (product name: ML605 GTW4, manufactured by Mitsubishi Electric Corp.). At this time, the same holes penetrate the aluminum foil. Thus, the penetrating holes were formed in the cathode. Thereby, the cathode was prepared. The cathode includes the active material layers each including the ternary cathode material, on both surfaces. The active material layers include the ternary cathode material at the active material density of 3.7 g/cm³ (80% relative to the true density) and at 18.5 mg/cm². By using the cathode thus prepared, the electrochemical cell was prepared in the same way as Example 1. In Examples 16 to 18, the holes were formed in the same way as Example 1 by using the pinholder. The electrochemical cells of Examples 14 to 18 were prepared in the same way as Example 13.

For comparison purpose, an electrochemical cell of Comparative Example 3 was prepared. The electrochemical cell of Comparative Example 3 is the same as that of Example 13, except that holes were not formed in the active material layer and the current collector. The data of the cathodes of Example 13 to 18 and Comparative Example 3 are shown in Table 3. All the active material layers of the cathodes prepared have the same active material density as that in Example 13.

**[Table 3]**

| | Example 13 | Example 14 | Example 15 | Example 16 | Example 17 | Example 18 | C. Example 3 |
|---|---|---|---|---|---|---|---|
| Presence of hole | Yes | Yes | Yes | Yes | Yes | Yes | No |
| Shape of hole's opening | Circular | Circular | Circular | Circular | Circular | Circular | - |
| Shape of hole in longitudinal sectional view | Quadrangular | Quadrangular | Quadrangular | Pentagonal | Pentagonal | Pentagonal | - |
| Maximum diameter (µm) of holes | 5 | 10 | 100 | 500 | 1000 | 2000 | - |
| Type of active material | Ternary cathode | Ternary cathode | Ternary cathode | Ternary cathode | Ternary cathode | Ternary cathode | Ternary cathode |
| Multiplier of maximum diameter of holes to get holes' center-to-center distance | 800 | 400 | 40 | 8 | 4 | 2 | - |
| Holes' center-to-center distance (µm) | 4000 | 4000 | 4000 | 4000 | 4000 | 4000 | - |
| Thickness (µm) of active material layer | 150 | 150 | 150 | 150 | 150 | 150 | 150 |
| Depth (µm) of hole | 150 | 150 | 150 | 120 | 120 | 120 | - |
| Ratio (%) of depth of hole to thickness of active material layer | 100 | 100 | 100 | 80 | 80 | 80 | - |
| Means for forming holes | Laser | Laser | Laser | Pinholder | Pinholder | Pinholder | - |
| Presence of penetrating hole formed in current collector | Yes | Yes | Yes | No | No | No | No |
| Discharge capacity (mAh/cm²) per area | 6.2 | 6.8 | 8.2 | 10.7 | 13.8 | 13.1 | 3.2 |
| Discharge capacity (mAh/g) per mass | 56 | 61 | 74 | 97 | 125 | 118 | 29 |

In Examples 19 to 22, the cathode for a lithium ion secondary battery using LNO as the active material was prepared, and was used in the electrochemical cell. In the electrochemical cells of Examples 19 to 22, the shapes of the openings of the holes formed in the active material layer are different, but other configurations are the same. The explanation will be made with regard to the preparation method of the electrochemical cell of Example 19, by way of example.

Firstly, each of LNO, which was used as the active material, PVDF, which was used as the binder, and acetylene black, which was used as the conduction assisting agent, was weighed to achieve the mass ratio of 94 : 4 : 2. Thereafter, the weighed PVDF was added to NMP, which was used as the solvent, and the resulting mixture was stirred for 20 minutes. Further, LNO and acetylene black were added to the resulting mixture, and the mixture was stirred and the viscosity was adjusted to 5 Pa·s. Thus, the cathode slurry was obtained.

Next, an aluminum foil having the thickness of 15 µm and trimmed to the size of 3 cm x 3 cm was prepared as the current collector. The active material layers were formed on both surfaces of the aluminum foil in the same way as Example 1. The thickness of the active material layer thus formed is 480 µm.

Next, the aluminum foil having the active material layers formed on both surfaces was compressed by using a roll pressing machine such that each active material layer was compressed to the thickness of 400 µm. The holes having the parameters shown in Table 4 were formed in the active material layer in the same way as Example 1 and thus the cathode was prepared. The cathode has the active material layers, each including LNO, on the both surfaces. The active material layers included LNO at the active material density of 3.8 g/cm³ (79% relative to the true density) and at 152 mg/cm². By using the cathode thus prepared, the electrochemical cell was prepared in the same way as Example 1. The electrochemical cells of Examples 20 to 22 were prepared in the same way as Example 19.

For comparison purpose, an electrochemical cell of Comparative Example 4 was prepared. The electrochemical cell of Comparative Example 4 is the same as the electrochemical cell of Example 19, except that the holes were not formed in the active material layer. The data of the cathodes of Example 19 to 22 and Comparative Example 4 are shown in Table 4. All the active material layers of the cathodes prepared have the same active material density as that in Example 19.

**[Table 4]**

| | Example 19 | Example 20 | Example 21 | Example 22 | C. Example 4 |
|---|---|---|---|---|---|
| Presence of hole | Yes | Yes | Yes | Yes | No |
| Shape of hole's opening | Star (5 points) | Circular | Quadrangular | Hexagonal | - |
| Shape of hole in longitudinal sectional view | Quadrangular | Quadrangular | Quadrangular | Quadrangular | - |
| Maximum diameter (µm) of holes | 1000 | 1000 | 1000 | 1000 | - |
| Type of active material | LiNiO₂ | LiNiO₂ | LiNiO₂ | LiNiO₂ | LiNiO₂ |
| Multiplier of maximum diameter of holes to get holes' center-to-center distance | 4 | 4 | 4 | 4 | - |
| Holes' center-to-center distance (µm) | 4000 | 4000 | 4000 | 4000 | - |
| Thickness (µm) of active material layer | 400 | 400 | 400 | 400 | 400 |
| Depth (µm) of hole | 300 | 300 | 300 | 300 | - |
| Ratio (%) of depth of hole to thickness of active material layer | 75 | 75 | 75 | 75 | - |
| Means for forming holes | Pinholder | Pinholder | Pinholder | Pinholder | - |
| Presence of penetrating hole formed in current collector | No | No | No | No | No |
| Discharge capacity (mAh/cm²) per area | 52.9 | 51.3 | 51.1 | 51.7 | 12.5 |
| Discharge capacity per mass (mAh/g) | 174 | 169 | 168 | 170 | 41 |

In Example 23, the cathode for a lithium ion secondary battery using LFP as the active material was prepared, and was used in the electrochemical cell.

Firstly, each of LFP, which was used as the active material, PVDF, which was used as the binder, and carbon nanotube (manufactured by Mitsubishi Material Corp.), which was used as the conduction assisting agent, was weighed to achieve the mass ratio of 93 : 5 : 2. Thereafter, the weighed PVDF was added to NMP, which was used as the solvent, and the resulting mixture was stirred for 20 minutes. Further, LFP and carbon nanotube were added to the resulting mixture, and the mixture was stirred and the viscosity was adjusted to 6 Pa·s. Thus, the cathode slurry was obtained.

Next, an aluminum foil having the thickness of 15 µm and trimmed to the size of 3 cm x 3 cm was prepared as the current collector. The active material layers were formed on both surfaces of the aluminum foil in the same way as Example 1. The thickness of the active material layer thus formed is 180 µm.

Next, the aluminum foil having the active material layers formed on both surfaces was compressed by using a roll pressing machine such that each active material layer was compressed to the thickness of 150 µm. The holes having the parameters shown in Table 5 were formed in the active material layer in the same way as Example 1. Thus, the cathode having the active material layers, each including LFP, on the both surfaces was prepared. The active material layers included LFP at the active material density of 2.88 g/cm³ (80% relative to the true density) and at 43.2 mg/cm². By using the cathode thus prepared, the electrochemical cell was prepared in the same way as Example 1.

For comparison purpose, an electrochemical cell of Comparative Example 5 was prepared. The electrochemical cell of Comparative Example 5 is the same as the electrochemical cell of Example 23, except that the holes were not formed in the active material layers of Comparative Example 5.

In Example 24, the cathode for a lithium ion secondary battery using NCA as the active material was prepared; and this was used as the cathode for the electrochemical cell.

Firstly, each of NCA, which was used as the active material, PVDF, which was used as the binder, and acetylene black, which was used as the conduction assisting agent, was weighed to achieve the mass ratio of 95 : 3 : 2. Thereafter, the weighed PVDF was added to NMP, which was used as the solvent, and the resulting mixture was stirred for 20 minutes. Further, NCA and acetylene black were added to the resulting mixture, and the mixture was stirred and the viscosity was adjusted to 5 Pa·s. Thus, the cathode slurry was obtained.

Next, an aluminum foil having the thickness of 15 µm and trimmed to the size of 3 cm x 3 cm was prepared as the current collector. The active material layers were formed on both surfaces of the aluminum foil in the same way as Example 1. The thickness of the active material layer thus formed is 620 µm.

Next, the aluminum foil having the active material layers formed on both surfaces was compressed by using a roll pressing machine such that each active material layer was compressed to the thickness of 500 µm. The holes having the parameters shown in Table 5 were formed in the active material layer in the same way as Example 1. Thus, the cathode having the active material layers, each including NCA, on the both surfaces was prepared. Each active material layer included NCA at the active material density of 3.9 g/cm³ (80% relative to the true density) and at 195 mg/cm². By using the cathode thus prepared, the electrochemical cell was prepared in the same way as Example 1.

For comparison purpose, an electrochemical cell of Comparative Example 6 was prepared. The electrochemical cell of Comparative Example 6 was the same as the electrochemical cell of Example 24, except that the holes were not formed in the active material layers of Comparative Example 6. The data of the cathodes of Example 23 and 24 and the data of the cathodes of Comparative Examples 5 and 6 are shown in Table 5.

**[Table 5]**

| | Example 23 | Example 24 | Comparative Example 5 | Comparative Example 6 |
|---|---|---|---|---|
| Presence of hole | Yes | Yes | No | No |
| Shape of hole's opening | Circular | Circular | - | - |
| Shape of hole in longitudinal sectional view | Pentagonal | Pentagonal | - | - |
| Maximum diameter (µm) of holes | 500 | 500 | - | - |
| Type of active material | LiFePO₄ | LiNi_{0.8}Co_{0.15}Al_{0.05}O₂ | LiFePO₄ | LiNi_{0.8}Co_{0.15}Al_{0.05}O₂ |
| Multiplier of maximum diameter of holes to get holes' center-to-center distance | 4 | 4 | - | - |
| Holes' center-to-center distance (µm) | 2000 | 2000 | - | - |
| Thickness (µm) of active material layer | 150 | 500 | 150 | 500 |
| Depth (µm) of hole | 120 | 450 | - | - |
| Ratio (%) of depth of hole to thickness of active material layer | 80 | 90 | - | - |
| Means for forming holes | Pinholder | Pinholder | - | - |
| Presence of penetrating hole formed in current collector | No | No | No | No |
| Discharge capacity (mAh/cm²) per area | 10.2 | 52.6 | 5.5 | 11.2 |
| Discharge capacity (mAh/g) per mass | 122 | 146 | 65 | 33 |

In Examples 25 to 29, the cathode for a lithium ion secondary battery using LCO as the active material was prepared, and was used in the electrochemical cell.

In Example 25, by using the cathode slurry having the viscosity of 4.5 Pa·s, the active material layers, each having the thickness of 230 µm, were formed on both surfaces of the aluminum foil having the thickness of 15 µm. The cathode shown in Table 6-1 was prepared in the same way as Example 1.

In Example 26, by using the cathode slurry having the viscosity of 4.8 Pa·s, the active material layers, each having the thickness of 235 µm, were formed on both surfaces of the aluminum foil having the thickness of 15 µm. The cathode shown in Table 6-1 was prepared in the same way as Example 25.

In Example 27, by using the cathode slurry having the viscosity of 5 Pa·s, the active material layers, each having the thickness of 240 µm, were formed on both surfaces of the aluminum foil having the thickness of 15 µm. The cathode shown in Table 6-1 was prepared in the same way as Example 25.

In Example 28, by using the cathode slurry having the viscosity of 5.5 Pa·s, the active material layers, each having the thickness of 250 µm, were formed on both surfaces of the aluminum foil having the thickness of 15 µm. In Example 29, by using the cathode slurry having the viscosity of 5.5 Pa·s, the active material layers, each having the thickness of 260 µm, were formed on both surfaces of the aluminum foil having the thickness of 15 µm. Each of the active material layers was compressed to the thickness of 200 µm. The surfaces of the cathodes were irradiated with a laser beam with the diameter of 100 µm by using a laser processing machine. Thus, the cathodes shown in Table 6-1 were prepared.

For comparison purpose, in Comparative Example 7, by using the cathode slurry having the viscosity of 4 Pa·s, the active material layers, each having the thickness of 210 µm, were formed on both surfaces of the aluminum foil having the thickness of 15 µm. The cathode shown in Table 6-1 was prepared in the same way as Example 25. In Comparative Example 8, the electrochemical cell having the same configuration as Comparative Example 7, except that there are no holes, was prepared.

In Comparative Example 9, by using the cathode slurry having the viscosity of 4 Pa·s, the active material layers, each having the thickness of 210 µm, were formed on both surfaces of the aluminum foil having the thickness of 15 µm. Each of the active material layers thus prepared was compressed to the thickness of 200 µm. The cathode shown in Table 6-1 was prepared in the same way as Example 25. In Comparative Example 10, the electrochemical cell having the same configuration as Comparative Example 9, except that there are no holes, was prepared.

In Comparative Example 11, by using the cathode slurry having the viscosity of 4 Pa·s, the active material layers, each having the thickness of 220 µm, were formed on both surfaces of the aluminum foil having the thickness of 15 µm. The cathode shown in Table 6-2 was prepared in the same way as Example 25. In Comparative Example 12, the electrochemical cell having the same configuration as Comparative Example 11, except that there are no holes, was prepared.

Electrochemical cells of Comparative Examples 13, 14, 15, 16, and 17 were prepared. Comparative Examples 13, 14, 15, 16, and 17 respectively have the same configuration as Examples 25, 26, 27, 28, and 29, except that there are no holes in the electrochemical cells of Comparative Examples 13, 14, 15, 16, and 17. The data of the cathodes of Examples 25 to 29 and Comparative Examples 7 to 17 are shown in Tables 6-1 and 6-2.

**[Table 6-1]**

| | Example 25 | Example 26 | Example 27 | Example 28 | Example 29 | Comparative Example 7 | Comparative Example 8 | Comparative Example 9 | Comparative Example 10 |
|---|---|---|---|---|---|---|---|---|---|
| Presence of hole | Yes | Yes | Yes | Yes | Yes | Yes | No | Yes | No |
| Shape of hole's opening | Circular | Circular | Circular | Circular | Circular | Circular | - | Circular | - |
| Shape of hole in longitudinal sectional view | Pentagonal | Pentagonal | Pentagonal | Quadrangular | Quadrangular | Pentagonal | - | Pentagonal | - |
| Maximum diameter (µm) of holes | 500 | 500 | 500 | 100 | 100 | 500 | - | 500 | - |
| Type of active material | LCO | LCO | LCO | LCO | LCO | LCO | LCO | LCO | LCO |
| Multiplier of maximum diameter of holes to get holes' center-to-center distance | 4 | 4 | 4 | 4 | 4 | 4 | - | 4 | - |
| Holes' center-to-center distance (µm) | 2000 | 2000 | 2000 | 1000 | 1000 | 2000 | - | 2000 | - |
| Thickness (µm) of active material layer | 200 | 200 | 200 | 200 | 200 | 200 | 200 | 200 | 200 |
| Depth (µm) of hole | 180 | 180 | 180 | 200 | 200 | 180 | - | 180 | - |
| Ratio (%) of depth of hole to thickness of active material layer | 90 | 90 | 90 | 100 | 100 | 90 | - | 90 | - |
| Means for forming holes | Pinholder | Pinholder | Pinholder | Laser | Laser | Pinholder | - | Pinholder | - |
| Presence of penetrating hole formed in current collector | No | No | No | Yes | Yes | No | No | No | No |
| Active material density (g/cm³) | 3.45 | 3.53 | 3.7 | 4.0 | 4.2 | 2.7 | 2.7 | 3.05 | 3.05 |
| Ratio (%) of active material density to true density | 68 | 70 | 73 | 79 | 83 | 53 | 53 | 60 | 60 |
| Supported amount (mg/cm²) of active material | 69 | 71 | 74 | 80 | 84 | 54 | 54 | 61 | 61 |
| Theoretical discharge capacity (mAh/cm²) | 10.0 | 10.3 | 10.7 | 11.6 | 12.2 | 7.8 | 7.8 | 8.8 | 8.8 |
| Discharge capacity (mAh) | 170 | 173 | 178 | 182 | 170 | 140 | 134 | 156 | 110 |

**[Table 6-2]**

| | Comparative Example 11 | Comparative Example 12 | Comparative Example 13 | Comparative Example 14 | Comparative Example 15 | Comparative Example 16 | Comparative Example 17 |
|---|---|---|---|---|---|---|---|
| Presence of hole | Yes | No | No | No | No | No | No |
| Shape of hole's opening | Circular | - | - | - | - | - | - |
| Shape of hole in longitudinal sectional view | Pentagonal | - | - | - | - | - | - |
| Maximum diameter (µm) of holes | 500 | - | - | - | - | - | - |
| Type of active material | LCO | LCO | LCO | LCO | LCO | LCO | LCO |
| Multiplier of maximum diameter of holes to get holes' center-to-center distance | 4 | - | - | - | - | - | - |
| Holes' center-to-center distance (µm) | 2000 | - | - | - | - | - | - |
| Thickness (µm) of active material layer | 200 | 200 | 200 | 200 | 200 | 200 | 200 |
| Depth (µm) of hole | 180 | - | - | - | - | - | - |
| Ratio (%) of depth of hole to thickness of active material layer | 90 | - | - | - | - | - | - |
| Means for forming holes | Pinholder | - | - | - | - | - | - |
| Presence of penetrating hole formed in current collector | No | No | No | No | No | No | No |
| Active material density (g/cm³) | 3.3 | 3.3 | 3.45 | 3.53 | 3.7 | 4.0 | 4.2 |
| Ratio (%) of active material density to true density | 65 | 65 | 68 | 70 | 73 | 79 | 83 |
| Supported amount (mg/cm²) of active material | 66 | 66 | 69 | 71 | 74 | 80 | 84 |
| Theoretical discharge capacity (mAh/cm²) | 9.6 | 9.6 | 10.0 | 10.3 | 10.7 | 11.6 | 12.2 |
| Discharge capacity (mAh) | 164 | 110 | 92 | 85 | 74 | 44 | 28 |

In the Examples, the maximum diameter of the holes, the holes' center-to-center distance, and the depth of the hole were measured with a laser microscope (product name: VK-X100, manufactured by Keyence Corp.). The holes were formed in the active material layer. The values were measured at each of 30 sites, and the average value was calculated.

The active material density was calculated in a way described below. Firstly, the cathode was trimmed to the area size of 1 cm², and then, the weight and thickness were measured. Then, the aluminum foil, i.e., the current collector was removed from the cathode thus trimmed, and the weight and thickness of the aluminum foil thus removed were measured. Then, the thickness of the aluminum foil was subtracted from the thickness of the cathode (when the active material layers was formed on both surfaces of the aluminum foil, the result was divided by 2) to calculate the thickness of the active material layer. The calculated value of the thickness of the active material layer was multiplied by the area of the trimmed current collector to obtain the calculated value of the volume of the active material layer.

Next, the value obtained by subtracting the weight of the aluminum foil from the weight of the cathode was multiplied by the weight fraction of the electrode slurry at the time of preparation (for example, in the case of LCO in Example 1, the weight fraction was 0.93) (when the active material layer was formed on both surfaces of the aluminum foil, the result was divided by 2) to obtain the calculated value of the weight of the active material. The weight of the active material may be measured as following: a part (the size of 1 cm²) of the cathode of the actual battery is cut out, then the current collector is removed from the cut-out piece of the cathode, then the mixed material layer including the active material is dissolved into N-methyl-2pyrrolidone (NMP) followed by centrifugal separation, thereby only the active material is separated, and then the separated active material is dried and weighed.

Finally, the weight of the active material thus obtained was divided by the volume of the active material layer, to calculate the active material density. The value obtained by dividing the value of the active material weight by the area of the cut-out piece of the cathode was defined as the supported amount of the active material per unit area.

### (2) Method for evaluating characteristics of electrochemical cell

The discharge capacity per unit mass was measured to evaluate the characteristics of the electrochemical cell. The discharge capacity was measured by using the charging/discharging testing apparatus (model: ACD-R1APS, manufactured by Aska Electronic Co., Ltd.) at the temperature of 25 ± 1°C. In all of Examples and Comparative Examples, the electrochemical cell was charged with the constant current (CC: constant current) of 5 mA/cm² and the constant voltage (CV: constant voltage) of 4.2 V until the charging current decreased to 0.1 mA/cm², and then the electrochemical cell was discharged with the constant current of 10 mA/cm² and the cut-off voltage of 3.0 V vs. Li/Li⁺, and the electric capacity obtained was defined as the discharge capacity.

### (3) Results of evaluation of electrochemical cell

### (3-1) Relationship between depth of hole of active material layer and characteristics of electrochemical cell

As shown in Table 1, in the electrochemical cells of Examples 1 to 6, the holes are formed in the cathodes. The ratio of the depth of the hole relative to the thickness of the active material layer is 5% or more . In Examples1 to 6, both the discharge capacity per unit area and the discharge capacity per unit mass are higher than those of the electrochemical cell of Comparative Example 1.

In a case where the ratio of the depth of the hole relative to the thickness of the active material layer was in a range of 67% or higher, the discharge capacities per area were 22.8 to 31.2 mAh/cm², and the discharge capacities per mass were 95 to 130 mAh/g. Thus, the discharge capacities per area and the discharge capacities per mass were higher. From this, it can be seen that in the cathode for a lithium ion secondary battery of the present invention, the ratio of the depth of the hole relative to the thickness of the active material layer is more preferably 67% or more.

The electrochemical cell of Example 5 has the holes. The holes penetrate the active material layer and have the bottom portions formed by (included in) the aluminum foil. On the other hand, the electrochemical cell of Example 6 has the penetrating holes that penetrate the aluminum foil and the active material layer. When comparing Example 5 with Example 6, the difference between them resides in whether the penetrating holes are formed in the aluminum foil. However, in the electrochemical cells of Example 5 and Example 6, the values of the discharge capacities are the same. Thus, the cell performance is not decreased even when the penetrating holes are formed in the aluminum foil.

### (3-2) Relationship between holes' center-to-center distance on active material layer and characteristics of electrochemical cell

As shown in Table 2, in the electrochemical cells of Examples 7 to 12, the holes are formed in the cathode with the holes' center-to-center distance of 500 to 8000 µm. Both the discharge capacities per area and the discharge capacities per mass of the electrochemical cells of Examples 7 to 12 are higher than those of the electrochemical cell of Comparative Example 2.

Especially, when the holes' center-to-center distance is in the range of 500 to 4000 µm, the discharge capacities per area was 77.5 to 86.4 mAh/cm², and the discharge capacities per mass was 114 to 127 mAh/g. Thus, the discharge capacities per area and the discharge capacities per mass are higher. From this, it can be seen that in the cathode for a lithium ion secondary battery of the present invention, the holes' center-to-center distance is more preferably 500 to 4000 µm.

### (3-3) Relationship between maximum diameter of holes of active material layer and characteristics of electrochemical cell

As shown in Table 3, in the electrochemical cells of Examples 13 to 18, the holes with the maximum diameter of 5 to 2000 µm are formed in the cathode. Both the discharge capacities per area and the discharge capacities per mass are higher than those of the electrochemical cell of Comparative Example 3.

Especially, when the maximum diameter of the holes is in the range of 500 to 2000 µm, the discharge capacities per area were 10.7 to 13.8 mAh/cm², and the discharge capacities per mass were 97 to 125 mAh/g. Thus, the discharge capacities per area and the discharge capacities per mass are higher. From this, it can be seen that in the cathode for a lithium ion secondary battery of the present invention, the maximum diameter of the holes is particularly preferably 500 to 2000 µm.

In the current collectors of the cathodes of Examples 13 to 15, the penetrating holes are formed. However, as explained above in (3-1), the discharge capacity does not change, regardless of whether the penetrating holes are formed in the aluminum foil.

### (3-4) Relationship between shape of openings of holes of active material layer and characteristics of electrochemical cell

As shown in Table 4, both the discharge capacities per area and the discharge capacities per mass in the electrochemical cells of Examples 19 to 22 are higher than those of the electrochemical cell of Comparative Example 4. From this, it can be seen that in the cathode for a lithium ion secondary battery of the present invention, the discharge capacity is improved regardless of the shape of the openings of the holes formed in the active material layer.

### (3-5) Relationship between type of active material and characteristics of electrochemical cell

As shown in Table 5, both the discharge capacity per area and the discharge capacity per mass of the electrochemical cell of Example 23 are higher than those of Comparative Example 5, and both the discharge capacity per area and the discharge capacity per mass of the electrochemical cell of Example 24 are higher than those of Comparative Example 6. In addition, as described above, the electrochemical cells of Examples in which any of LCO, LMO, ternary cathode material, and LNO is used as the active material have higher discharge capacities as compared with the corresponding Comparative Examples not having the holes formed in the cathode. From the above, in the cathode for a lithium ion secondary battery of the present invention, it can be seen that the discharge capacity is improved by using any of LCO, LMN, the ternary cathode material, LNO, LFP, and NCA as the active material.

### (3-6) Relationship between active material density of active material layer and characteristics of electrochemical cell

The relationship between the active material density of the active material layer of the cathode and the discharge capacity of the electrochemical cell using this cathode is shown in Tables 6-1 and 6-2. In order to compare under conditions similar to the actual use of the cell, the discharge capacity per electrochemical cell was used as the value of discharge capacity. LCO was used as the active material. As shown in Tables 6-1 and 6-2, the electrochemical cells of Examples 25 to 29 have higher discharge capacities than those of the electrochemical cells of Comparative Examples 7 to 17.

When Example 25 is compared with Comparative Example 13, which is different from Example 25 only in that the holes were not formed, the discharge capacity in Example 25 is significantly higher than that of Comparative Example 13 by 78 mAh due to the holes. On the other hand, when Comparative Example 7 is compared with Comparative Example 8, which is different from Comparative Example 7 only in that the holes were not formed, the discharge capacity of Comparative Example 7 is higher than that of Comparative Example 8 only by 6 mAh, despite that the same holes as those in Example 25 are formed in the cathode of Comparative Example 7. Likewise, the discharge capacity of Comparative Example 9 is higher than that of Comparative Example 10 by 46 mAh, and the discharge capacity of Comparative Example 11 is higher than that of Comparative Example 12 by 54 mAh. However, the increases in the discharge capacities are small as compared with the case of Example 25.

In Comparative Examples 7 and 8, the active material density of the cathode is low, i.e., 53% relative to the true density of the active material, so that more voids are formed correspondingly. Because of this, the cathode includes sufficient amount of the electrolyte solution even though the holes are not formed in the cathode. Thus, the active material that is present in the position deep in the thickness direction from the surface can be effectively utilized. Accordingly, it is considered that the active material that can be utilized effectively is not increased so much even when the holes are formed in the cathode. Hence, the increase in the discharge capacity is small. Likewise, in the cathodes of Comparative Examples 9 to 12, it is considered that the ratio of the active material density relative to the true density is so low that the cathodes include sufficient amount of the electrolyte solution, and thus, the active material that can be utilized effectively is so small that the increase in the discharge capacity is small.

On the other hand, in Comparative Example 13, because the active material density is high, i.e., 68% relative to the true density, the amount of the electrolyte solution included in the cathode was insufficient. Hence, the active material that was present in the position deep in the thickness direction from the surface could not be effectively utilized. By forming the holes as in the case of Example 25, the electrolyte solution is present also in the holes, and the lithium ion can reach the position deep in the thickness direction from the surface, and the active material that can be effectively utilized is increased, and the discharge capacity in the cathode is increased. This is supported by the finding that an amount of the discharge capacity increased by the formation of the holes increases with the increase in the active material density.

When compared between Comparative Example 7 and Comparative Example 8, between Comparative Example 9 and Comparative Example 10, between Comparative Example 11 and Comparative Example 12, between Example 25 and Comparative Example 13, between Example 26 and Comparative Example 14, between Example 27 and Comparative Example 15, between Example 28 and Comparative Example 16, and between Example 29 and Comparative Example 17, increases in the discharge capacity due to formation of the holes are approximately 1.04 folds, approximately 1.4 folds, approximately 1.5 folds, approximately 1.9 folds, approximately 2.04 folds, approximately 2.4 folds, approximately 4 folds, and approximately 6 folds, respectively; and thus, the amount of increase in the discharge capacity increases with the increase in the active material density.

As discussed above, when the ratio of the active material density relative to the true density is in the range of 68 to 83%, the discharge capacity is significantly increased due to formation of the holes, and it can be seen that the increase in the discharge capacity due to formation of the holes is large as compared with Comparative Examples 7, 9, and 11. Further, when the ratio of the active material density relative to the true density is 70% or higher, the discharge capacity is increased by 2-folds or more due to formation of the holes, so that more significant increase in the discharge capacity is achieved. Further, when the ratio of the active material density relative to the true density is 73% or higher, it can be seen that increase in the discharge capacity due to formation of the holes is much larger even as compared with Examples 25 and 26.

When the active material density becomes higher, the active material that is supported by the cathode increases, so that the theoretical discharge capacity increases. However, in the electrochemical cells of Comparative Examples 8, 10, and 12 to 17, in which conventional cathodes not having the holes are used, the value of the discharge capacity decreases with increase in the active material density. The reason for this is considered as follows. In the electrochemical cells of Comparative Examples, with the increase in the active material density, the active material supported by the cathode is increased; however, the voids in the active material layer are decreased correspondingly. Thereby, the amount of the electrolyte solution is decreased, so that the lithium ion cannot reach the active material that is present in the position deep in the thickness direction from the surface. Hence, the active material that can be effectively utilized is decreased.

On the contrary, in the electrochemical cells of Examples 25 to 28, in which the holes are formed in the cathode, the discharge capacity is increased with the increase in the active material density. The reason for this is considered as follows. The active material supported by the cathode is increased with the increase in the active material density. In addition, due to the formation of the holes, the lithium ion reaches the active material that is present in the position deep in the thickness direction from the surface. Thus, the active material that can be effectively utilized is increased.

As discussed above, with increase in the active material density, a very high effect can be obtained by formation of the holes. This has not been disclosed in the conventional art (as cited). In a case where the active material density is high, the voids in the cathode that can impregnate the electrolyte solution are less and the space among the active materials is narrow. Because of this, the lithium ion that is present in the electrolyte solution as being solvated with ethylene carbonate, which is the solvent used, cannot go through among the active materials; and thus, in the cathode not formed with the hole, the lithium ion cannot reach the active material that is present in the position far from the separator. With increase in the active material density, the space among the active materials becomes narrower, so that it becomes more difficult for the lithium ion to reach. It is considered that because of this, with increase in the active material density, the discharge capacity drastically decreases.

On the other hand, in the cathode formed with the holes, the lithium ion can migrate through the electrolyte solution that is present in the holes to the position of the cathode far from the separator, and then the lithium ion penetrates in the horizontal direction of the holes. It is considered that because of this, even in the position deep in the thickness direction from the surface, the lithium ion can be transferred, so that a high discharge capacity is obtained. It is considered that the cathode supports more amount of the active material with the increase in the active material density, so that the active material that can be effectively utilized is increased. Hence, a high discharge capacity is achieved.

In addition, in the cathode of the present invention, the amount of the electrolyte solution to be impregnated in the cathode can be reduced. For example, in the cathode of Example 28, the active material density is 79%; and in the remaining 21%, voids, PVDF, and AB are included. The cathode is composed of 95% by weight of LCO, 3% by weight of PVDF, and 2% by weight of AB. By taking the composition and the densities of PVDF and AB into account, the volume that is occupied by PVDF and AB in the cathode is approximately 13%. Consequently, the void ratio is approximately 8%.

On the other hand, the active material density of the cathode of Comparative Example 7 is 53%. Therefore, with the use of calculation similar to the above, the volume occupied by PVDF and AB is approximately 13%. Accordingly, the void ratio is approximately 34%.

Namely, because the electrolyte solution is included in the voids of the cathode, the void ratio of Example 28 is approximately 1/4 of Comparative Example 7, so that the amount of the electrolyte solution impregnated is also approximately 1/4 of Comparative Example 7. Therefore, because the active material is included highly densely, the amount of the electrolyte solution that is impregnated in the cathode decreases to approximately 1/4. Accordingly, the cathode for a lithium ion secondary battery of the present invention can reduce the amount of the electrolyte solution to be used; and in addition, the discharge capacity per volume is high and charge and discharge can be performed promptly.

### (Example II)

Further, in order to examine the relationship between the active material density of the active material layer of the cathode and the discharge capacity of the electrochemical cell using the cathode, the electrochemical cells of Examples 30 to 59 were prepared. In Examples 30 to 59, the active material densities of the cathodes of the present invention were varied in the range of 68 to 83% relative to the true density; and the electrochemical cells similar to the above were prepared by using the cathodes.

In Examples 30 to 34, the ternary cathode material (Li(Ni_{1/3}Mn_{1/3}Co_{1/3})O₂) was used as the active material, and all the holes formed in the active material of the cathode had the same shape: the shape of the opening of the hole was a star (5 points); the longitudinal sectional shape of the hole was a U-shape; the maximum diameter of the hole was 500 µm; the holes' center-to-center distance was 2000 µm; and the depth of the hole was 120 µm (the ratio of the depth of the hole relative to the thickness of the active material layer was 80%). For comparison purpose, in Comparative Examples 18, 20, and 26, the cathodes having the same holes as the Examples while having the active material density of 50%, 60%, and 85%, respectively, relative to the true density were prepared; in Comparative Example 19, the cathode without having the holes while having the same active material density as the cathode of Comparative Example 18 was prepared. In Comparative Example 21, the cathode without having the holes while having the same active material density as the cathode of Comparative Example 20 was prepared; and in Comparative Examples 22 to 25, the cathodes without having the holes while having the same active material densities as the cathodes of Examples 30 to 33 were respectively prepared; and by using the cathodes, respective electrochemical cells were prepared. The electrochemical cells were prepared in the same way as Example 1. In Examples 30 to 34 and Comparative Examples 18 to 26, the electrochemical cell was charged with the charging current of 1mA/cm² and the constant voltage of 4.20 V until the charging current decreased to 0.1 mA/cm². Then, this was discharged with the cut-off voltage of 3.0 V vs. Li/Li⁺ and the discharging current of 5 mA/cm² to obtain the measured discharge capacity. In the first discharging, 10 mAh/cm² of discharge was carried out.

In Examples 35 to 39, LMO was used as the active material, and all the holes formed in the active material of the cathode had the same shape: the shape of the opening of the hole was a quadrangle; the longitudinal sectional shape of the hole was a pentagon; the maximum diameter of the hole was 1000 µm; the holes' center-to-center distance was 4000 µm; and the depth of the hole was 180 µm (the ratio of the depth of the hole relative to the thickness of the active material layer was 90%). For comparison purpose, in Comparative Examples 27, 29, and 35, the cathodes having the same holes as the Examples while having the active material density of 50%, 60%, and 85%, respectively, relative to the true density were prepared; in Comparative Example 28, the cathode without having the holes while having the same active material density as the cathode of Comparative Example 27 was prepared; in Comparative Example 30, the cathode without having the holes while having the same active material density as the cathode of Comparative Example 29 was prepared; and in Comparative Examples 31 to 34, the cathodes without having the holes while having the same active material densities as the cathodes of Examples 35 to 38 were respectively prepared; and by using the cathodes, respective electrochemical cells were prepared. The electrochemical cells were prepared in the same way as Example 1. In Examples 35 to 39 and Comparative Examples 27 to 35, the electrochemical cell was charged with the charging current of 1mA/cm² and the constant voltage of 4.35 V until the charging current decreased to 0.1 mA/cm². Then, this was discharged with the cut-off voltage of 3.0 V vs. Li/Li⁺ and the discharging current of 5 mA/cm² to obtain the measured discharge capacity. In the first discharging, 10 mAh/cm² of discharge was carried out.

In Examples 40 to 44, LNO was used as the active material, and all the holes formed in the active material of the cathode had the same shape: the shape of the opening of the hole was a circle (round shape); the longitudinal sectional shape of the hole was a pentagon; the maximum diameter of the hole was 1000 µm; the holes' center-to-center distance was 3000 µm; and the depth of the hole was 143 µm (the ratio of the depth of the hole relative to the thickness of the active material layer was 95%). For comparison purpose, in Comparative Examples 36, 38, and 44, the cathodes having the same holes as the Examples while having the active material density of 50%, 60%, and 85%, respectively, relative to the true density were prepared; in Comparative Example 37, the cathode without having the holes while having the same active material density as the cathode of Comparative Example 36 was prepared; in Comparative Example 39, the cathode without having the holes while having the same active material density as the cathode of Comparative Example 38 was prepared; and in Comparative Examples 40 to 43, the cathodes without having the holes while having the same active material densities as the cathodes of Examples 40 to 43 were respectively prepared; and by using the cathodes, respective electrochemical cells were prepared. The electrochemical cells were prepared in the same way as Example 1. In Examples 40 to 44 and Comparative Examples 36 to 44, the electrochemical cell was charged with the charging current of 1mA/cm² and the constant voltage of 4.40 V until the charging current decreased to 0.1 mA/cm². Then, the electrochemical cell was discharged with the cut-off voltage of 3.0 V vs. Li/Li⁺ and the discharging current of 5 mA/cm² to obtain the measured discharge capacity. In the first discharging, 5 mAh/cm² of discharge was carried out.

In Examples 45 to 49, NCA was used as the active material, and all the holes formed in the active material of the cathode had the same shape: the shape of the opening of the hole was a hexagon; the longitudinal sectional shape of the hole was a U-shape; the maximum diameter of the hole was 800 µm; the holes' center-to-center distance was 2500 µm; and the depth of the hole was 162 µm (the ratio of the depth of the hole relative to the thickness of the active material layer was 90%). For comparison purpose, in Comparative Examples 45, 47, and 53, the cathodes having the same holes as the Examples while having the active material density of 50%, 60%, and 85%, respectively, relative to the true density were prepared; in Comparative Example 46, the cathode without having the holes while having the same active material density as the cathode of Comparative Example 45 was prepared; in Comparative Example 48, the cathode without having the holes while having the same active material density as the cathode of Comparative Example 47 was prepared; and in Comparative Examples 49 to 52, the cathodes without having the holes while having the same active material densities as the cathodes of Examples 45 to 48 were respectively prepared; and by using the cathodes, respective electrochemical cells were prepared. The electrochemical cells were prepared in the same way as Example 1. In Examples 45 to 49 and Comparative Examples 45 to 53, the electrochemical cell was charged with the charging current of 1mA/cm² and the constant voltage of 4.40 V until the charging current decreased to 0.1 mA/cm². Then, this was discharged with the cut-off voltage of 3.0 V vs. Li/Li⁺ and the discharging current of 5 mA/cm² to obtain the measured discharge capacity. In the first discharging, 5 mAh/cm² of discharge was carried out.

In Examples 50 to 54, LFP was used as the active material, and all the holes formed in the active material of the cathode had the same shape: the shape of the opening of the hole was a circle (round shape), the longitudinal sectional shape of the holes was a quadrangle, the maximum diameter of the hole was 100 µm, the holes' center-to-center distance was 1000 µm, and the depth of the hole was 150 µm (the ratio of the depth of the hole relative to the thickness of the active material layer was 100%). The holes are penetrating holes that penetrate through the current collector of the cathode. For comparison purpose, in Comparative Examples 54, 56, and 62, the cathodes having the same holes as the Examples while having the active material density of 50%, 60%, and 85%, respectively, relative to the true density were prepared; in Comparative Example 55, the cathode without having the holes while having the same active material density as the cathode of Comparative Example 54 was prepared; in Comparative Example 57, the cathode without having the holes while having the same active material density as the cathode of Comparative Example 56 was prepared; and in Comparative Examples 58 to 61, the cathodes without having the holes while having the same active material densities as the cathodes of Examples 50 to 53 were respectively prepared; and by using the cathodes, respective electrochemical cells were prepared. The electrochemical cells were prepared in the same way as Example 1. In Examples 50 to 54 and Comparative Examples 54 to 62, the electrochemical cell was charged with the charging current of 1mA/cm² and the constant voltage of 3.70 V until the charging current decreased to 0.1 mA/cm². Then, the electrochemical cell was discharged with the cut-off voltage of 2.5 V vs. Li/Li⁺ and the discharging current of 5 mA/cm² to obtain the measured discharge capacity. In the first discharging, 5 mAh/cm² of discharge was carried out.

In Examples 55 to 59, the active material layer including 80% by weight of LCO and 20% by weight of LFP as the active material was used, and all the holes formed in the active material of the cathode had the same shape: the shape of the opening of the hole was a circle (round shape), the longitudinal sectional shape of the hole was a quadrangle, the maximum diameter of the hole was 500 µm, the holes' center-to-center distance was 4000 µm, and the depth of the hole was 190 µm (the ratio of the depth of the hole relative to the thickness of the active material layer was 95%). For comparison purpose, in Comparative Examples 63, 65, and 71, the cathodes having the same holes as the Examples while having the active material density of 50%, 60%, and 85%, respectively, relative to the true density were prepared; in Comparative Example 64, the cathode without having the holes while having the same active material density as the cathode of Comparative Example 63 was prepared; in Comparative Example 66, the cathode without having the holes while having the same active material density as the cathode of Comparative Example 65 was prepared; and in Comparative Examples 67 to 70, the cathodes without having the holes while having the same active material densities as the cathodes of Examples 55 to 58 were respectively prepared; and by using the cathodes, respective electrochemical cells were prepared. The electrochemical cells were prepared in the same way as Example 1. In Examples 55 to 59 and Comparative Examples 63 to 71, the electrochemical cell was charged with the charging current of 1mA/cm² and the constant voltage of 4.20 V until the charging current decreased to 0.1 mA/cm². Then, this was discharged with the cut-off voltage of 2.5 V vs. Li/Li⁺ and the discharging current of 5 mA/cm² to obtain the measured discharge capacity. In the first discharging, 5 mAh/cm² of discharge was carried out.

Measurement results of parameters of the cathodes of the electrochemical cells and of the discharge capacities of Examples 30 to 59 are shown in Tables 7-1 and 7-2 and measurement results of parameters of the cathodes of the electrochemical cells and of the discharge capacities of Comparative Examples (may be abbreviated as C. Ex.) 18 to 71 are shown in Tables 8-1 and 8-2. The active material utility rate (%) of the active material was calculated by dividing the discharge capacity per mass by the theoretical discharge capacity per mass.

**[Table 7-1]**

| | Type of active material | Ratio of active material density to true density (%) | Active material density (g/cm³) | Thickness of active material layer (µm) | Supported amount of active material (mg/cm²) | Theoretical discharge capacity (mAh/cm²) |
|---|---|---|---|---|---|---|
| Ex. 30 | Ternary cathode | 68 | 3.12 | 150 | 46.8 | 7.0 |
| Ex. 31 | Ternary cathode | 70 | 3.22 | 150 | 48.3 | 7.2 |
| Ex. 32 | Ternary cathode | 73 | 3.36 | 150 | 50.4 | 7.6 |
| Ex. 33 | Ternary cathode | 80 | 3.68 | 150 | 55.2 | 8.3 |
| Ex. 34 | Ternary cathode | 83 | 3.82 | 150 | 57.3 | 8.6 |
| Ex. 35 | LiMn₂O₄ | 68 | 2.86 | 200 | 57.2 | 6.29 |
| Ex. 36 | LiMn₂O₄ | 70 | 2.94 | 200 | 58.8 | 6.47 |
| Ex. 37 | LiMn₂O₄ | 73 | 3.07 | 200 | 61.3 | 6.74 |
| Ex. 38 | LiMn₂O₄ | 80 | 3.36 | 200 | 67.2 | 7.39 |
| Ex. 39 | LiMn₂O₄ | 83 | 3.49 | 200 | 69.8 | 7.68 |
| Ex. 40 | LiNiO₂ | 68 | 3.26 | 150 | 48.9 | 9.04 |
| Ex. 41 | LiNiO₂ | 70 | 3.36 | 150 | 50.4 | 9.32 |
| Ex. 42 | LiNiO₂ | 73 | 3.50 | 150 | 52.5 | 9.71 |
| Ex. 43 | LiNiO₂ | 80 | 3.84 | 150 | 57.6 | 10.7 |
| Ex. 44 | LiNiO₂ | 83 | 3.98 | 150 | 59.7 | 11.0 |
| Ex. 45 | LiNi₀₈Co_{0.15}Al_{0.05}O₂ | 68 | 3.33 | 180 | 59.9 | 10.1 |
| Ex. 46 | LiNi₀₈Co_{0.15}Al_{0.05}O₂ | 70 | 3.43 | 180 | 61.7 | 10.4 |
| Ex. 47 | LiNi₀₈Co_{0.15}Al_{0.05}O₂ | 73 | 3.58 | 180 | 64.4 | 10.8 |
| Ex. 48 | LiNi₀₈Co_{0.15}Al_{0.05}O₂ | 80 | 3.92 | 180 | 70.6 | 11.9 |
| Ex. 49 | LiNi₀₈Co_{0.15}Al_{0.05}O₂ | 83 | 4.06 | 180 | 73.1 | 12.3 |
| Ex. 50 | LiFePO₄ | 68 | 2.45 | 150 | 36.8 | 5.34 |
| Ex. 51 | LiFePO₄ | 70 | 2.52 | 150 | 37.8 | 5.48 |
| Ex. 52 | LiFePO₄ | 73 | 2.63 | 150 | 39.4 | 5.71 |
| Ex. 53 | LiFePO₄ | 80 | 2.88 | 150 | 43.2 | 6.26 |
| Ex. 54 | LiFePO₄ | 83 | 2.99 | 150 | 44.9 | 6.51 |
| Ex. 55 | LiCoO₂:80% +LFP:20% | 68 | 3.24 | 200 | 64.8 | 9.66 |
| Ex. 56 | LiCoO₂:80% +LFP:20% | 70 | 3.32 | 200 | 66.4 | 9.89 |
| Ex. 57 | LiCoO₂:80% +LFP:20% | 73 | 3.47 | 200 | 69.3 | 10.3 |
| Ex. 58 | LiCoO₂:80% +LFP:20% | 80 | 3.81 | 200 | 76.2 | 11.4 |
| Ex. 59 | LiCoO₂:80% +LFP:20% | 83 | 3.95 | 200 | 79 | 11.8 |

**[Table 7-2]**

| | Presence of hole | Charging current (mA/cm²) | Discharging current (mA/cm²) | Discharge capacity per mass | Discharge capacity per area (mAh/cm²) | Active material utility rate (%) |
|---|---|---|---|---|---|---|
| Ex. 30 | Yes | 1 | 5 | 140 | 6.6 | 93 |
| Ex. 31 | Yes | 1 | 5 | 138 | 6.7 | 93 |
| Ex. 32 | Yes | 1 | 5 | 137 | 6.9 | 91 |
| Ex. 33 | Yes | 1 | 5 | 133 | 7.3 | 89 |
| Ex. 34 | Yes | 1 | 5 | 125 | 7.2 | 83 |
| Ex. 35 | Yes | 1 | 5 | 110 | 6.29 | 100 |
| Ex. 36 | Yes | 1 | 5 | 109 | 6.41 | 99 |
| Ex. 37 | Yes | 1 | 5 | 108 | 6.60 | 98 |
| Ex. 38 | Yes | 1 | 5 | 103 | 6.92 | 94 |
| Ex. 39 | Yes | 1 | 5 | 97 | 6.77 | 88 |
| Ex. 40 | Yes | 1 | 5 | 182 | 8.90 | 98 |
| Ex. 41 | Yes | 1 | 5 | 181 | 9.12 | 98 |
| Ex. 42 | Yes | 1 | 5 | 179 | 9.42 | 97 |
| Ex. 43 | Yes | 1 | 5 | 176 | 10.1 | 95 |
| Ex. 44 | Yes | 1 | 5 | 160 | 9.55 | 86 |
| Ex. 45 | Yes | 1 | 5 | 166 | 9.94 | 99 |
| Ex. 46 | Yes | 1 | 5 | 165 | 10.2 | 98 |
| Ex. 47 | Yes | 1 | 5 | 165 | 10.5 | 98 |
| Ex. 48 | Yes | 1 | 5 | 159 | 11,2 | 95 |
| Ex. 49 | Yes | 1 | 5 | 151 | 11.0 | 90 |
| Ex. 50 | Yes | 1 | 5 | 142 | 5.23 | 98 |
| Ex. 51 | Yes | 1 | 5 | 142 | 5.37 | 97 |
| Ex. 52 | Yes | 1 | 5 | 141 | 5.54 | 98 |
| Ex. 53 | Yes | 1 | 5 | 138 | 5.96 | 95 |
| Ex. 54 | Yes | 1 | 5 | 129 | 5.79 | 89 |
| Ex. 55 | Yes | 1 | 5 | 147 | 9.53 | 99 |
| Ex. 56 | Yes | 1 | 5 | 147 | 9.74 | 99 |
| Ex. 57 | Yes | 1 | 5 | 147 | 10.1 | 98 |
| Ex. 58 | Yes | 1 | 5 | 140 | 10.7 | 94 |
| Ex. 59 | Yes | 1 | 5 | 137 | 10.8 | 92 |

**[Table 8-1]**

| | Active material | Ratio of active material density to true density (%) | Active material density (g/cm³) | Thickness of active material layer (µm) | Supported amount of active material (mg/cm²) | Theoretical discharge capacity (mAh/cm²) | Presence of hole | Charging current (mA/cm²) | Discharging current (mA/cm²) | Discharge capacity per mass (mA/g) | Discharge capacity per area (mAh/cm²) | Active material utility rate (%) |
|---|---|---|---|---|---|---|---|---|---|---|---|---|
| C. Ex. 18 | Ternary cathode | 50 | 2.3 | 150 | 34.5 | 5.2 | Yes | 1 | 5 | 150 | 5.2 | 100 |
| C. Ex. 19 | Ternary cathode | 50 | 2.3 | 150 | 34.5 | 5.2 | No | 1 | 5 | 150 | 5.2 | 100 |
| C. Ex. 20 | Ternary cathode | 60 | 2.76 | 150 | 41.4 | 6.2 | Yes | 1 | 5 | 150 | 6.2 | 100 |
| C. Ex. 21 | Ternary cathode | 60 | 2.76 | 150 | 41.4 | 6.2 | No | 1 | 5 | 141 | 5.8 | 94 |
| C. Ex. 22 | Ternary cathode | 68 | 3.12 | 150 | 46.8 | 7.0 | No | 1 | 5 | 105 | 4.9 | 70 |
| C. Ex. 23 | Ternary cathode | 70 | 3.22 | 150 | 48.3 | 7.2 | No | 1 | 5 | 102 | 4.9 | 68 |
| C. Ex. 24 | Ternary cathode | 73 | 3.36 | 150 | 50.4 | 7.6 | No | 1 | 5 | 98 | 4.9 | 65 |
| C. Ex. 25 | Ternary cathode | 80 | 3.68 | 150 | 55.2 | 8.3 | No | 1 | 5 | 87 | 4.8 | 58 |
| C. Ex. 26 | Ternary cathode | 85 | 3.91 | 150 | 58.7 | 8.8 | Yes | 1 | 5 | 99 | 5.8 | 66 |
| C. Ex. 27 | LiMn₂O₄ | 50 | 2.1 | 200 | 42 | 4.62 | Yes | 1 | 5 | 110 | 4.62 | 100 |
| C. Ex. 28 | LiMn₂O₄ | 50 | 2.1 | 200 | 42 | 4.62 | No | 1 | 5 | 110 | 4.62 | 100 |
| C. Ex. 29 | LiMn₂O₄ | 60 | 2.52 | 200 | 50.4 | 5.54 | Yes | 1 | 5 | 110 | 5.54 | 100 |
| C. Ex. 30 | LiMn₂O₄ | 60 | 2.52 | 200 | 50.4 | 5.54 | No | 1 | 5 | 104 | 5.24 | 95 |
| C. Ex. 31 | LiMn₂O₄ | 68 | 2.86 | 200 | 57.2 | 6.29 | No | 1 | 5 | 89 | 5.09 | 81 |
| C. Ex. 32 | LiMn₂O₄ | 70 | 2.94 | 200 | 58.8 | 6.47 | No | 1 | 5 | 85 | 4.98 | 77 |
| C. Ex. 33 | LiMn₂O₄ | 73 | 3.07 | 200 | 61.3 | 6.74 | No | 1 | 5 | 77 | 4.72 | 70 |
| C. Ex. 34 | LiMn₂O₄ | 80 | 3.36 | 200 | 67.2 | 7.39 | No | 1 | 5 | 62 | 4.17 | 56 |
| C. Ex. 35 | LiMn₂O₄ | 85 | 3.57 | 200 | 71.4 | 7.85 | Yes | 1 | 5 | 71 | 5.07 | 65 |
| C. Ex. 36 | LiNiO₂ | 50 | 2.4 | 150 | 36 | 6.66 | Yes | 1 | 5 | 185 | 6.66 | 100 |
| C. Ex. 37 | LiNiO₂ | 50 | 2.4 | 150 | 36 | 6.66 | No | 1 | 5 | 185 | 6.66 | 100 |
| C. Ex. 38 | LiNiO₂ | 60 | 2.88 | 150 | 43.2 | 7.99 | Yes | 1 | 5 | 185 | 7.99 | 100 |
| C. Ex. 39 | LiNiO₂ | 60 | 2.88 | 150 | 43.2 | 7.99 | No | 1 | 5 | 178 | 7.69 | 96 |
| C. Ex. 40 | LiNiO₂ | 68 | 3.26 | 150 | 48.9 | 9.04 | No | 1 | 5 | 147 | 7.19 | 79 |
| C. Ex. 41 | LiNiO₂ | 70 | 3.36 | 150 | 50.4 | 9.32 | No | 1 | 5 | 140 | 7.08 | 76 |
| C. Ex. 42 | LiNiO₂ | 73 | 3.50 | 150 | 52.5 | 9.71 | No | 1 | 5 | 122 | 6.41 | 66 |
| C. Ex. 43 | LiNiO₂ | 80 | 3.84 | 150 | 57.6 | 10.7 | No | 1 | 5 | 106 | 6.10 | 57 |
| C. Ex. 44 | LiNiO₂ | 85 | 4.08 | 150 | 61.2 | 11.3 | Yes | 1 | 5 | 132 | 8.08 | 71 |
| C. Ex. 45 | LiNi_{0.8} Co_{0.15} Al_{0.05}O₂ | 50 | 2.45 | 180 | 44.1 | 7.41 | Yes | 1 | 5 | 168 | 7.41 | 100 |

**[Table 8-2]**

| | Type of a ctive material | Ratio of active material density to true density (%) | Active material density (g/cm³) | Thickness of active material layer (µm) | Supported amount of active material (mg/cm²) | Theoretical Discharge capacity (mAh/cm²) | Presence of hole | Charg ing current (mAh/cm²) | Discharging current (mAh/cm²) | Discharge capacity per mass (mAh/g) | Discharge capacity per area (mAh/cm²) | Active material utility rate (%) |
|---|---|---|---|---|---|---|---|---|---|---|---|---|
| C. Ex. 46 | LiNi_{0.8}Co_{0.15}Al_{0.05}O₂ | 50 | 2.45 | 180 | 44.1 | 7.41 | No | 1 | 5 | 168 | 7.41 | 100 |
| C. Ex. 47 | LiNi_{0.8}Co_{0.15}Al_{0.05}O₂ | 60 | 2.94 | 180 | 52.9 | 8.89 | Yes | 1 | 5 | 168 | 8.89 | 100 |
| C. Ex. 48 | LiNi_{0.8}Co_{0.15}Al_{0.05}O₂ | 60 | 2.94 | 180 | 52.9 | 8.89 | No | 1 | 5 | 153 | 8.09 | 91 |
| C. Ex. 49 | LiNi_{0.8}Co_{0.15}Al_{0.05}O₂ | 68 | 3.33 | 180 | 59.9 | 10.1 | No | 1 | 5 | 137 | 8.21 | 81 |
| C. Ex. 50 | LiNi_{0.8}Co_{0.15}Al_{0.05}O₂ | 70 | 3.43 | 180 | 61.7 | 10.4 | No | 1 | 5 | 129 | 8.01 | 77 |
| C. Ex. 51 | LiNi_{0.8}Co_{0.15}Al_{0.05}O₂ | 73 | 3.58 | 180 | 64.4 | 10.8 | No | 1 | 5 | 114 | 7.34 | 68 |
| C. Ex. 52 | LiNi_{0.8}Co_{0.15}Al_{0.05}O₂ | 80 | 3.92 | 180 | 70.6 | 11.9 | No | 1 | 5 | 98 | 6.92 | 58 |
| C. Ex. 53 | LiNi_{0.8}Co_{0.15}Al_{0.05}O₂ | 85 | 4.16 | 180 | 74.9 | 12.6 | Yes | 1 | 5 | 122 | 9.14 | 73 |
| C. Ex. 54 | LiFePo₄ | 50 | 1.8 | 150 | 27 | 3.91 | Yes | 1 | 5 | 145 | 3.91 | 100 |
| C. Ex. 55 | LiFePo₄ | 50 | 1.8 | 150 | 27 | 3.91 | No | 1 | 5 | 145 | 3.91 | 100 |
| C. Ex. 56 | LiFePo₄ | 60 | 2.16 | 150 | 32.4 | 4.70 | Yes | 1 | 5 | 145 | 4.70 | 100 |
| C. Ex. 57 | LiFePo₄ | 60 | 2.16 | 150 | 32.4 | 4.70 | No | 1 | 5 | 133 | 4.31 | 92 |
| C. Ex. 58 | LiFePo₄ | 68 | 2.45 | 150 | 36.8 | 5.34 | No | 1 | 5 | 111 | 4.08 | 77 |
| C. Ex. 59 | LiFePO₅ | 70 | 2.52 | 150 | 37.8 | 5.48 | No | 1 | 5 | 107 | 4.05 | 74 |
| C. Ex. 60 | LiFePO₆ | 73 | 2.63 | 150 | 39.4 | 5.71 | No | 1 | 5 | 101 | 4.03 | 70 |
| C. Ex. 61 | LiFePO₄ | 80 | 2.88 | 150 | 43.2 | 6.26 | No | 1 | 5 | 87 | 3.76 | 60 |
| C. Ex. 62 | LiFePO₄ | 85 | 3.06 | 150 | 45.9 | 6.66 | Yes | 1 | 5 | 105 | 4.82 | 72 |
| C. Ex. 63 | LiCoO₂: 80% +LFP:20 % | 50 | 2.38 | 200 | 47.6 | 7.09 | Yes | 1 | 5 | 149 | 7.09 | 100 |
| C. Ex. 64 | LiCoO₂: 80% +LFP:20 % | 50 | 2.38 | 200 | 47.6 | 7.09 | No | 1 | 5 | 149 | 7.09 | 100 |
| C. Ex. 65 | LiCoO₂: 80% +LFP:20 % | 60 | 2.85 | 200 | 57 | 8.49 | Yes | 1 | 5 | 149 | 8.49 | 100 |
| C. Ex. 66 | LiCoO₂: 80% +LFP:20 % | 60 | 2.85 | 200 | 57 | 8.49 | No | 1 | 5 | 136 | 7.75 | 91 |
| C. Ex. 67 | LiCoO₂: 80% +LFP:20 % | 68 | 3.24 | 200 | 64.8 | 9.66 | No | 1 | 5 | 115 | 7.45 | 77 |
| C. Ex. 68 | LiCoO₂: 80% +LFP:20 % | 70 | 3.32 | 200 | 66.4 | 9.89 | No | 1 | 5 | 111 | 7.41 | 75 |
| C. Ex. 69 | LiCoO₂: 80% +LFP:22 % | 73 | 3.47 | 200 | 69.3 | 10.3 | No | 1 | 5 | 106 | 7.31 | 71 |
| C. Ex. 70 | LiCoO₂: 80% +LFP:20 % | 80 | 3.81 | 200 | 76.2 | 11.4 | No | 1 | 5 | 96 | 7.32 | 64 |
| C. Ex. 71 | LiCoO₂: 80% +LFP:20 % | 85 | 4.05 | 200 | 81 | 12.1 | Yes | 1 | 5 | 114 | 9.23 | 77 |

Examples and Comparative Examples each having the cathode with the holes formed in the active material layer supporting the ternary cathode material as the active material are compared respectively with Comparative Examples each having the cathode supporting the same active material and having the same active material density as those of Examples and Comparative Examples but without holes. In the electrochemical cells having the cathodes which have the active material layers formed with the holes wherein the ratios of the active material density relative to the true density are 50% and 60%, as compared with the electrochemical cells having the cathodes which have the active material layers not formed with the holes wherein the ratios of the active material density relative to the true density are the same as the above-mentioned, the discharge capacities per mass are approximately 1.00 fold and approximately 1.06 folds, respectively, indicating that the discharge capacity is hardly increased by forming the holes in the active material layer. On the other hand, in the electrochemical cell having the cathode which has the holes formed in the active material layer wherein the ratio of the active material density relative to the true density is 68%, the discharge capacity per mass is approximately 1.33 folds as compared with the electrochemical cell having the cathode which does not have the holes formed in the active material layer wherein the ratio of the active material density relative to the true density is the same as the above-mentioned, suggesting that this increase in the discharge capacity is caused by formation of the holes. The increase in the discharge capacity per mass due to the formation of the holes becomes much more significant when the ratio of the active material density relative to the true density is 68% or more.

In the electrochemical cells having the cathodes which have the active material layers wherein the ratios of the active material density relative to the true density are 50% and 60%, it is considered that even if the holes are not formed, the active material supported by the active material layer can be effectively utilized so that the active material that can be effectively utilized only after the formation of the holes is so small that the discharge capacities per mass are not significantly increased by formation of the holes.

On the other hand, in the electrochemical cell having the cathode which has the holes formed in the active material layer wherein the ratio of the active material density relative to the true density is 68%, it is considered that the active material that can be effectively utilized only after the formation of the holes is so large that the discharge capacity per mass is significantly increased by the formation of the holes in the active material layer.

The discharge capacity per mass of the electrochemical cell having the cathode which has the holes formed in the active material layer is approximately 1.35 folds when the ratio of the active material density relative to the true density is 70%, approximately 1.40 folds when the ratio of the active material density relative to the true density is 73%, and approximately 1.53 folds when the ratio of the active material density relative to the true density is 80%; and thus, the discharge capacity is increased as the ratio of the active material density relative to the true density becomes higher.

The electrochemical cells in which the cathodes having the holes formed in the active material layer that supports LMO as the active material are used are respectively compared with the electrochemical cells in which the cathodes not having the holes while supporting the same active material and having the same active material density as those of the foregoing electrochemical cells. In the electrochemical cells having the cathodes which have the holes formed in the active material layers wherein the ratios of the active material density relative to the true density are 50%, 60%, 68%, 70%, 73%, and 80%, by the formation of the holes in the active material layer, the discharge capacities per mass are increased by approximately 1.00 fold, approximately 1.05 folds, approximately 1.24 folds, approximately 1.29 folds, approximately 1.40 folds, and approximately 1.66 folds, respectively, showing the same tendency as the case in which the ternary cathode material is used as the active material.

The electrochemical cells in which the cathodes having the holes formed in the active material layer that supports LNO as the active material are used are respectively compared with the electrochemical cells in which the cathodes not having the holes while supporting the same active material and having the same active material density as those of the foregoing electrochemical cell. In the electrochemical cells having the cathodes which have the holes formed in the active material layers wherein the ratios of the active material density relative to the true density are 50%, 60%, 68%, 70%, 73%, and 80%, by the formation of the holes in the active material layer, the discharge capacities per mass are increased by approximately 1.00 fold, approximately 1.04 folds, approximately 1.24 folds, approximately 1.29 folds, approximately 1.47 folds, and approximately 1.66 folds, respectively, showing the same tendency as the case in which the ternary cathode material is used as the active material.

The electrochemical cells in which the cathodes having the holes formed in the active material layer that supports NCA as the active material are used are respectively compared with the electrochemical cells in which the cathodes not having the holes while supporting the same active material and having the same active material density as those of the foregoing electrochemical cell. In the electrochemical cells having the cathodes which have the holes formed in the active material layers wherein the ratios of the active material density relative to the true density are 50%, 60%, 68%, 70%, 73%, and 80%, by the formation of the holes in the active material layer, the discharge capacities per mass are increased by approximately 1.00 fold, approximately 1.10 folds, approximately 1.21 folds, approximately 1.28 folds, approximately 1.45 folds, and approximately 1.62 folds, respectively, showing the same tendency as the case in which the ternary cathode material is used as the active material.

The electrochemical cells in which the cathodes having the holes formed in the active material layer that supports LFP as the active material are used are respectively compared with the cathodes not having the holes while supporting the same active material and having the same active material density as those of the foregoing electrochemical cell. In the electrochemical cells having the cathodes which have the holes formed in the active material layers wherein the ratios of the active material density relative to the true density are 50%, 60%, 68%, 70%, 73%, and 80%, by the formation of the holes in the active material layer, the discharge capacities per mass are increased by approximately 1.00 fold, approximately 1.09 folds, approximately 1.28 folds, approximately 1.33 folds, approximately 1.40 folds, and approximately 1.59 folds, respectively, showing the same tendency as the case in which the ternary cathode material is used as the active material.

The electrochemical cells in which the cathodes having the holes formed in the active material layer that supports a mixture of LCO and LFP as the active material are used are respectively compared with the electrochemical cells in which the cathodes not having the holes while supporting the same active materials and having the same active material density as those of the foregoing electrochemical cell. In the electrochemical cells having the cathodes which have the holes formed in the active material layers wherein the ratios of the active material density relative to the true density are 50%, 60%, 68%, 70%, 73%, and 80%, by the formation of the holes in the active material layer, the discharge capacities per mass are increased by approximately 1.00 fold, approximately 1.10 folds, approximately 1.28 folds, approximately 1.32 folds, approximately 1.39 folds, and approximately 1.46 folds, respectively, showing the same tendency as the case in which the ternary cathode material is used as the active material.

As shown above, regardless of the active material, when the ratio of the active material density relative to the true density is 68% or more, by forming the holes in the active material layer of the cathode, in the electrochemical cell, the discharge capacity per mass is significantly increased. Namely, when the ratio is 70% or more, the discharge capacity per mass is increased by approximately 30% or more, and when the ratio is 73% or more, the discharge capacity per mass is increased by approximately 40% or more; and thus, it can be seen that with increase in the ratio of the active material density relative to the true density, an increase in the discharge capacity per mass becomes more enhanced.

Comparison is made among Example 33 in which the ratio of the active material density relative to the true density is 80%, Example 34 in which the ratio of the active material density relative to the true density is 83%, and Comparative Example 26 in which the ratio of the active material density relative to the true density is 85%, wherein in all of these Examples and Comparative Example, the ternary cathode material is supported as the active material and the holes are formed in the active material layer. When the ratio of the active material density relative to the true density is increased from 80% to 83%, the discharge capacity per mass is decreased by approximately 3%. On the other hand, when the ratio of the active material density relative to the true density is increased from 83% to 85%, the discharge capacity per mass is decreased by approximately 26%, i.e., the decrease is significant. This tendency can be seen similarly in the electrochemical cells using other active materials. In the cathode of Comparative Example 26, the active material density is very high so that not only the void that is present in the active material is not many but also the size thereof is small. Because of this, it is considered that in the cathode of Comparative Example 26, the amount of the electrolyte solution that is present inside the cathode is small and the void that is present among the active materials is not many; and thus, the migration resistance of the lithium ion becomes very high. Therefore, it is considered that even if the holes are formed in the active material layer, the active material only in the part that is exposed to the inner space of the holes can be utilized, and the active material that is present inside the active material layer cannot be effectively utilized, so that the decrease in the value of the discharge capacity per mass is so significant. As can be seen above, when the ratio of the active material density relative to the true density is 83% or higher, even if the supported amount of the active material is increased by increasing the active material density, the active material that cannot be effectively utilized increases even if the holes are formed, thereby leading to drastic decrease in the discharge capacity per mass; and as a result of it, the capacity of the battery is significantly decreased.

As can be seen above, in the cathode for a lithium ion secondary battery of the present invention, when the ratio of the active material density relative to the true density is 68 to 83%, the active material that cannot be effectively utilized when the holes are not formed can be effectively utilized by formation of the holes. Especially, the ratio of the active material density relative to the true density is preferably 70 to 83%, more preferably 73 to 83%.

### (Example III)

In order to examine the relationship between the thickness of the active material layer and the discharge capacity of the electrochemical cell, in Examples 60 to 63, the cathodes of the present invention were prepared by changing the thicknesses of the active material layers from 150 to 1000 µm; and the electrochemical cells were prepared by using the cathodes. In Examples 60 to 63, the active material layer including LCO as the active material with the active material density of 68% relative to the true density was used; and all the holes formed in the active material of the cathode had the same shape: the shape of the opening of the hole was a circle (round shape), the longitudinal sectional shape of the hole was a triangle, the maximum diameter of the hole was 1000 µm, the holes' center-to-center distance was 3000 µm, and the ratio of the depth of the hole relative to the thickness of the active material layer was 90%. For comparison purpose, in Comparative Examples 72, 74, and 80, the cathodes which are the same as those of the Examples, except that the thicknesses of the active material layers were 50, 100, and 1200 µm, respectively, were prepared. In Comparative Examples 73, 75 to 79, and 81, the cathodes as same as those of Examples 60 to 63, and Comparative Examples 72, 74, and 80, except that the holes were not formed, were prepared. By using the cathodes, the electrochemical cells were prepared. The electrochemical cells were prepared in the same way as Example 1. The discharge capacities of these electrochemical cells were measured as follows. Each cell was charged with the charging current of 1 mA/cm² and the constant voltage of 4.2 V vs. Li/Li⁺ until the charging current decreased to 0.1 mA/cm², and then, discharged with the cut-off voltage of 3.0 V vs. Li/Li⁺ and the discharging current of 5 mA/cm². The parameters of the cathodes of Examples and Comparative Examples thus prepared and the measured discharge capacities are shown in Table 9.

**[Table 9]**

| | Type of active material | Ratio of active material density to true density (%) | Active material density (g/cm³) | Thickness of active material layer (µm) | Supported amount of active material (mg/cm²) | Theoretical discharge capacity (mAh/cm²) | Presence of hole | Depth of hole (µm) | Ratio of depth of hole to thickness of active material layer (%) | Charging current (mA/cm²) | Discharging current (mA/cm²) | Discharge capacity per mass (mAh/g) | Discharge capacity per area (mAh/cm²) | Active material utility rate (%) |
|---|---|---|---|---|---|---|---|---|---|---|---|---|---|---|
| Example 60 | LCO | 68 | 3.45 | 150 | 51.8 | 17.5 | Yes | 135 | 90 | 1 | 5 | 132 | 6.8 | 91 |
| Example 61 | LCO | 68 | 3.45 | 200 | 69.0 | 10.0 | Yes | 180 | 90 | 1 | 5 | 128 | 8.8 | 88 |
| Example 62 | LCO | 68 | 3.45 | 500 | 172.0 | 25.0 | Yes | 450 | 90 | 1 | 5 | 110 | 19.0 | 75 |
| Example 63 | LCO | 68 | 3.45 | 1000 | 345.0 | 50.0 | Yes | 900 | 90 | 1 | 5 | 86 | 30.0 | 59 |
| C. Example 72 | LCO | 68 | 3.45 | 50 | 17.2 | 2.5 | Yes | 45 | 90 | 1 | 5 | 141 | 2.4 | 97 |
| C. Example 73 | LCO | 68 | 3.45 | 50 | 17.2 | 2.5 | No | - | - | 1 | 5 | 132 | 2.3 | 91 |
| C. Example 74 | LCO | 68 | 3.45 | 100 | 34.5 | 5.0 | Yes | 90 | 90 | 1 | 5 | 136 | 4.7 | 93 |
| C. Example 75 | LCO | 68 | 3.45 | 100 | 34.5 | 5.0 | No | - | - | 1 | 5 | 98 | 3.4 | 67 |
| C. Example 76 | LCO | 68 | 3.45 | 150 | 51.8 | 17.5 | No | - | - | 1 | 5 | 91 | 4.7 | 62 |
| C. Example 77 | LCO | 68 | 3.45 | 200 | 69.0 | 10.0 | No | - | - | 1 | 5 | 87 | 6.0 | 60 |
| C. Example 78 | LCO | 68 | 3.45 | 500 | 172.0 | 25.0 | No | - | - | 1 | 5 | 68 | 12.0 | 47 |
| C. Example 79 | LCO | 68 | 3.45 | 1000 | 345.0 | 50.0 | No | - | - | 1 | 5 | 25 | 8.6 | 36 |
| C. Example 80 | LCO | 68 | 3.45 | 1200 | 414.0 | 60.0 | Yes | 1080 | 90 | 1 | 5 | 65 | 27.0 | 45 |
| C. Example 81 | LCO | 68 | 3.45 | 1200 | 414.0 | 60.0 | No | - | - | 1 | 5 | 21 | 8.7 | 35 |

In the electrochemical cells of Examples 60 to 63, both the discharge capacity per mass and the discharge capacity per area are higher than those of respective electrochemical cells of Comparative Examples 76 to 79 in which the thicknesses of the active material layers are the same as those of the Examples except that the electrochemical cells of Comparative Examples 76 to 79 do not have the holes; and thus, it can be seen that the discharge capacities are increased by formation of the holes.

The electrochemical cells having the active material layer formed with the holes are compared with respective electrochemical cells having the active material layer not formed with the holes. The electrochemical cells to be compared have the active material layers with same thickness. In the electrochemical cells of the cathodes each having the active material layer formed with the holes and with the thickness of 50 µm, 100 µm, 150 µm, 200 µm, 500 µm, 1000 µm, and 1200 µm, the discharge capacities per mass are increased by approximately 1.07 folds, approximately 1.39 folds, approximately 1.45 folds, approximately 1.47 folds, approximately 1.62 folds, approximately 3.44 folds, and approximately 3.10 folds, respectively, by the formation of the holes.

In the electrochemical cell of the cathode having a comparatively thin active material layer such as, for example, 50 µm, the amount of increase in the discharge capacity due to the formation of the holes in the active material layer is small. It is considered that in the case of a thin active material layer, the lithium ion in the electrolyte solution can be readily reach the active material that is present inside the active material layer, so that many active materials can be effectively utilized even if the holes are not formed. Because of this, it is considered that in the cathode having a thin active material layer, the active material that can be utilized only after the formation of the holes in the active material layer is so small that the increase in the discharge capacity is also small.

On the contrary, when the thickness of the active material layer is 150 µm or more, by the formation of the holes in the active material layer, the discharge capacity per mass increases significantly, as much as approximately 50% or more. When the thickness of the active material layer is 500 µm or more, the discharge capacity per mass increases more significantly, as much as approximately 60% or more. As the active material layer becomes thicker, the amount of the increase in the discharge capacity per mass increases.

In the electrochemical cell of the cathode in which the active material layer is thick and the holes are not formed, the migration resistance of the lithium ion is high because the lithium ion migrates a long distance in the voids of the active material layer. In addition, it is considered that because of the thickness, the electrochemical cell cannot effectively utilize the active material that is present in the position deep in the thickness direction from the surface of the active material layer, so that the discharge capacity per mass is especially small.

In the above-described electrochemical cell of the cathode, it is considered that when the holes are formed in the active material layer, the lithium ion preferentially passes through the electrolyte solution that is present in the holes so that migration of the lithium ion is facilitated, thereby lowering the migration resistance. In addition, the active material that is present in the position deep in the thickness direction from the surface of the active material layer, which could not be utilized without the formation of the holes, is effectively utilized. As a result, the discharge capacity per mass is increased.

The electrochemical cell of the cathode having the active material layer formed with the holes and having the thickness of 1000 µm is compared with the electrochemical cell of the cathode having the active material layer formed with the holes and having the thickness of 1200 µm. In the electrochemical cell of the cathode having the active material layer with the thickness of 1200 µm, the discharge capacity per mass is significantly decreased and the discharge capacity per area is slightly decreased, despite that the thickness of the active material layer is increased so that the supported amount of the active material is increased as compared with the electrochemical cell of the cathode having the active material layer with the thickness of 1000 µm.

In addition, in the electrochemical cell of the cathode having the active material layer with the thickness of 1200 µm, the amount of increase in the discharge capacity per mass due to the formation of the holes is decreased as compared with the electrochemical cell of the cathode having the active material layer with the thickness of 1000 µm.

The active material layer of the electrochemical cell of the cathode having the active material layer with the thickness of 1200 µm is thick. When the active material layer becomes thicker, even when the lithium ion migrates in the electrolyte solution in the holes, the migration distance of the lithium ion becomes longer. Because of this, it is considered that the electrochemical cell of the cathode having the active material layer with the thickness of 1200 µm cannot carry out the cell reaction efficiently as compared with the electrochemical cell of the cathode having the active material layer with the thickness of 1000 µm, so that the discharge capacity per mass is significantly decreased and the discharge capacity per area is also decreased, thereby the amount of increase in the discharge capacity per mass due to formation of the holes is decreased.

From the above, when the thickness of the active material layer is 150 to 1000 µm, formation of the holes allows the cathode for a secondary battery of the present invention to effectively utilize the active material which was not effectively utilized when the holes were not formed. Thus, the discharge capacity is increased. Especially, the thickness of the active material layer is more preferably 500 to 1000 µm.

### [Reference Numerals]

- 1: lithium ion secondary battery
- 2: cathode for lithium ion secondary battery
- 3: anode
- 4: separator
- 5, 10: current collector
- 6, 11: active material layer
- 7, 12: hole
- 8: bottom portion
- 9, 13: opening

## Claims

1. A cathode for a lithium ion secondary battery comprising:
a current collector; and
an active material layer formed on a surface of the current collector, the active material layer including a plurality of holes formed in a surface of the active material layer, an active material density being 68 to 83% relative to a true density of an active material included in the active material layer, the active material layer having a thickness of 150 to 1000 µm.

2. The cathode for a lithium ion secondary battery according to claim 1, wherein the active material layer includes LiCoO₂ as the active material, and the active material density is 3.45 to 4.19 g/cm³.

3. The cathode for a lithium ion secondary battery according to claim 1, wherein the active material layer includes Li(NiₓMn_{y}Co_{z})O₂, and the active material density is 3.12 to 3.81 g/cm³, provided that 0 <x<1.0, 0<y<1.0, 0<z<1.0, and x+y+z=1.0.

4. The cathode for a lithium ion secondary battery according to claim 1, wherein the active material layer includes LiMn₂O₄ as the active material, and the active material density is 2.86 to 3.48 g/cm³.

5. The cathode for a lithium ion secondary battery according to claim 1, wherein the active material layer includes LiNiO₂ as the active material, and the active material density is 3.26 to 3.98 g/cm³.

6. The cathode for a lithium ion secondary battery according to claim 1, wherein the active material layer includes LiNi_{0.8}Co_{0.15}Al_{0.05}O₂ as the active material, and the active material density is 3.33 to 4.06 g/cm³.

7. The cathode for a lithium ion secondary battery according to claim 1, wherein the active material layer includes LiFePO₄ as the active material, and the active material density is 2.45 to 2.98 g/cm³.

8. The cathode for a lithium ion secondary battery according to claim 1, wherein the active material layer includes the active material, the active material being two or more selected from LiCoO₂, Li(NiₓMn_{y}Co_{z})O₂, LiMn₂O₄, LiNiO₂, LiNi_{0.8}Co_{0.15}Al_{0.05}O₂, and LiFePO₄, and the active material density is in a range of more than 2.45 to less than 4.19 g/cm³, provided that 0<x<1.0, 0<y<1.0, 0<z<1.0, and x+y+z=1.0.

9. The cathode for a lithium ion secondary battery according to any one of claims 1 to 8, wherein the active material layer comprises 0.5 to 10% by weight of a conduction assisting agent and 0.5 to 10% by weight of a binder.

10. The cathode for a lithium ion secondary battery according to any one of claims 1 to 9, wherein a maximum diameter of the holes is 5 to 2000 µm.

11. The cathode for a lithium ion secondary battery according to any one of claims 1 to 10, wherein a distance between centers of the holes is 500 to 8000 µm.

12. The cathode for a lithium ion secondary battery according to any one of claims 1 to 11, wherein openings of the holes have at least one shape selected from a circle, a triangle, a quadrangle, pentagon, and a polygon with the number of vertices greater than 5.

13. The cathode for a lithium ion secondary battery according to any one of claims 1 to 12, wherein a depth of the holes is 5% or more relative to a thickness of the active material layer.

14. The cathode for a lithium ion secondary battery according to any one of claims 1 to 13, wherein the holes include bottom portions formed by the current collector.

15. The cathode for a lithium ion secondary battery according to any one of claims 1 to 13, wherein the active material layers are formed on both surfaces of the current collector, and the holes include openings on a surface of one of the active material layers, the holes penetrating the active material layer and the current collector, the holes including bottom portions formed by the other of the active material layers.

16. The cathode for a lithium ion secondary battery according to claim 15, wherein the holes include a hole including an opening on a surface of the other of the active material layers and penetrating the active material layer and the current collector and including a bottom portion formed by the one of the active material layers, and the hole having the opening on the surface of the one of the active material layers and the hole having the opening on the surface of the other of the active material layers are arranged alternately.

17. A lithium ion secondary battery comprising the cathode for the lithium ion secondary battery according to any one of claims 1 to 16.
